# EUROPEAN PATENT SPECIFICATION

(11) **EP 2 870 526 B1**
(45) Date of publication and mention of the grant of the patent: **01.11.2017**
(21) Application number: 12880291.5
(22) Date of filing: 16.08.2012
(51) Int. Cl.: G06F 3/048, G06F 3/041, G06F 3/14, G06F 3/0488, G06F 3/0481

(54) **DISPLAY DEVICE INCLUDING TOUCHSCREEN AND METHOD FOR CONTROLLING THE SAME**
ANZEIGEVORRICHTUNG MIT BERÜHRUNGSBILDSCHIRM UND VERFAHREN ZUR STEUERUNG DAVON
DISPOSITIF D'AFFICHAGE COMPRENANT UN ÉCRAN TACTILE ET SON PROCÉDÉ DE COMMANDE

(30) Priority: 04.07.2012 KR 20120073011
(43) Date of publication of application: 13.05.2015
(73) Proprietor: LG Electronics Inc., Seoul 150-721 (KR)
(72) Inventor: KIM, Jihyun, Seoul 137-724 (KR)
(74) Representative: Beyer, Andreas
(86) International application number: PCT/KR2012/006531
(87) International publication number: WO 2014/007425

(56) References cited:
- US-A1- 2004 150 664
- US-A1- 2006 090 164
- US-A1- 2006 168 528
- US-A1- 2009 070 670
- US-A1- 2009 225 053
- US-A1- 2012 017 152

## Description

### Technical Field

The present invention relates to a display device including a touchscreen and a method for controlling the same, and more particularly to a display device including a touchscreen, the size of which is greater than the use radius of a user, the display device providing a user interface that is expedient to manage a region of the touchscreen where the user's hand does not reach, and a method for controlling the display device. The display device, for example, corresponds to a digital signage appliance, a kiosk, and a smart TV.

### Background Art

A touchscreen refers to a screen capable of directly receiving input data thereon, in which when the hand of a human being or an object touches letters appear on the screen without using a keyboard or a particular position, the screen functions to recognize the position, enabling particular processing via stored software.

For example, a touchscreen serves as a combination of a general monitor screen and a touch panel attached thereto. The touch panel is configured such that invisible infrared light is applied vertically and horizontally to create numerous square lattices on a screen, thereby functioning to allow a user to recognize a position where the user touches the lattice(s) by his/her finger or using an object.

Accordingly, if the user touches letters or picture information on the screen equipped with the touch panel, the touchscreen functions to recognize an item that the user selects based on a touched position of the screen, and to process a corresponding command using a computer, thereby assisting the user in easily accessing desired information.

Thanks to the above described characteristics, the touchscreen has been widely used in guidance software at places with lots of foot traffic, such as subway stations, departments, and banks, for example. In addition, the touchscreen has been frequently applied to sale terminals, and also has been utilized for general business use.

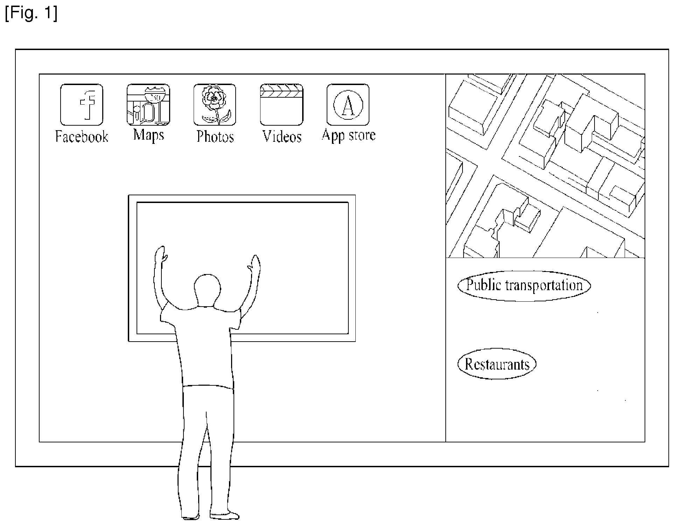

FIG. 1 is a view showing an embodiment in relation to use of a display device including a conventional touchscreen. In the present embodiment, the display device is of a kiosk type that is installed at a public place. As a touchscreen is generalized, a large scale touchscreen has been frequently used at exhibitions, public places, and large conference halls, for example. However, as shown in FIG. 1, if the size of the touchscreen is greater than the use radius of a user, the touchscreen has a region where the user's hand does not reach, which makes it difficult for the user to use the touchscreen.

In the case of the above described large scale touchscreen having a greater size than the use radius of the user, the user cannot efficiently use the touchscreen, and it is difficult to realize interaction between the display device and the user. As a result, the large scale touchscreen frequently causes a situation that the touchscreen unilaterally provides information, and has difficulty in receiving feedback from the user. For this reason, in fact, the touchscreen often cannot sufficiently meet the use purpose thereof.

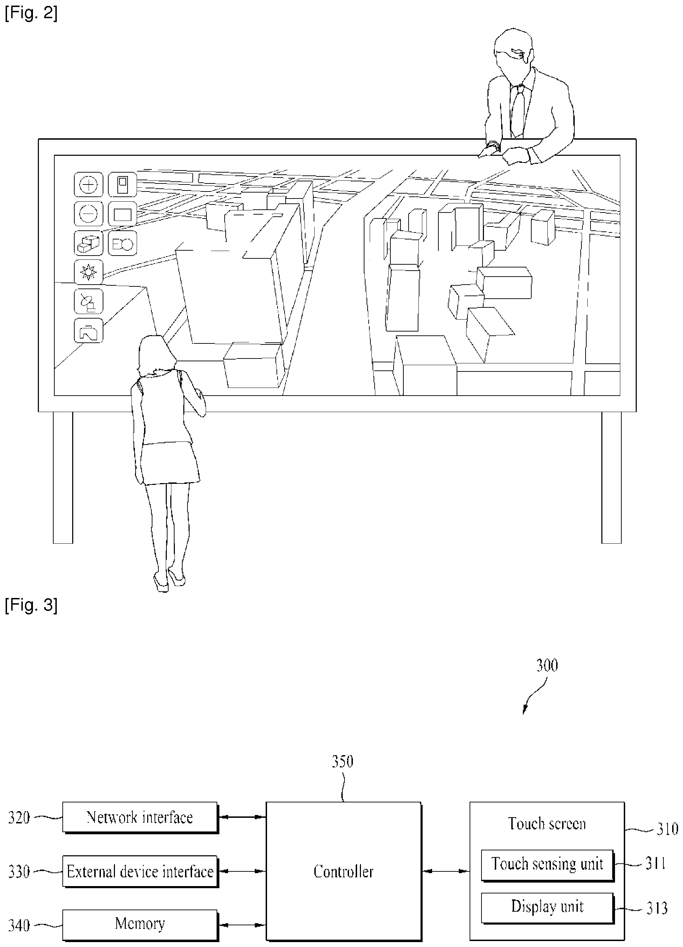

FIG. 2 is a view showing another embodiment in relation to use of a display device including a conventional touchscreen. The present embodiment proposes a situation in which a plurality of users is using the touchscreen. However, as shown in FIG. 2, since the size of the touchscreen is greater than the use radius of a user, the user cannot efficiently control a region close to another user, which makes it difficult for the plurality of users to work together.
US 2006/168528 discloses providing a graphical user interface where a pointing device can move desktop objects accurately and across large distances on a display. A screen map is created on the desktop in which is displayed a bitmap of the desktop. Objects in the screen map can be moved within the screen map to affect large movements of objects on the desktop.
US 2004/150664 discloses a system and method for facilitating user access to remote content from a current location. The invention monitors for and detects an activation gesture. The activation gesture may include an empty or nonempty selection, the nonempty selection having a source icon. Upon detecting the activation gesture, a target region is determined according to the activation gesture. Target icons capable of responding to activation gestures' selection are selected from those icons within the target region. If the activation gesture includes a nonempty selection having a source icon, only those icons within the target region and compatible with the source icon are selected. The target icons are displayed in a cluster in the proximity of the working location until a user action dismissing the cluster is detected.
US 2009/070670 provides an information display device having a large display screen which enables a user to operate an object displayed at a position distant from a user operation position. The information display device has the display screen with a touch sensor, and enables a remote control of the display screen through a touch operation on the small screen area which is set to display a demagnified version of an image displayed on the display screen, by shifting a touch operation position in the small screen area to a position on the display screen. Hence an operation on the display screen and that on the small screen can be executed as the operations corresponding with each other.

### DISCLOSURE OF INVENTION

### TECHNICAL PROBLEM

An object of the present invention is to provide a user interface for controlling a region of a touchscreen where the user's hand does not reach in the case in which the touchscreen has a greater size than the use radius of a user.

Another object of the present invention is to provide a user interface that is expedient to assist a plurality of users in efficiently performing group work when simultaneously using a touchscreen having a greater size than the use radius of the user.

A further object of the present invention is to provide a user interface that is expedient for interaction between a user and a display device including a touchscreen, the size of which is greater than the use radius of the user.

### SOLUTION TO PROBLEM

To achieve these objects and other advantages and in accordance with the purpose of the invention, as embodied and broadly described herein, a control method of a display device including a touchscreen that displays at least one object, includes receiving a first touch input for designating a control area to select and control the at least one object, displaying the designated control area, wherein the control area includes at least one object, receiving a second touch input for generating a target area to move the object included in the control area, displaying the target area, wherein the target area includes a duplicate object of the object included in the control area, and wherein a surrounding image of the object included in the control area is synchronized with a surrounding image of the object included in the target area, receiving a third touch input
with respect to the surrounding image of the control area, moving the duplicate object in response to the third touch input, and displaying the moved target area, detecting whether movement of the duplicate object is completed, and replacing the duplicate object with the object of the control area, and deleting a graphic image of the duplicate object, when movement of the duplicate object is completed.

In accordance with another aspect of the present invention, a control method of a display device including a touchscreen that displays at least one object, includes receiving a first touch input for setting a particular object as a control area in order to control the particular object among the at least one object, receiving a second touch input for generating a duplicate object to move the control object, wherein the duplicate object is synchronized with the control object and a surrounding image of the control object is synchronized with a surrounding image of the duplicate object, displaying the surrounding image of the control object and the surrounding object of the duplicate object at both ends of a bar-shaped connection object that connects both the objects to each other, receiving a third touch input for adjusting a displacement of the bar-shaped connection object, moving a position of the control object or the duplicate object based on the adjusted displacement of the connection object, receiving a fourth touch input with respect to the control object, displaying visual properties of the duplicate object changed in response to the fourth touch input, and replacing the duplicate object with the control object, and deleting graphic images of the duplicate object and the connection object, when change of the duplicate object is completed.

In accordance with another aspect of the present invention, a display device including a touchscreen that displays at least one object, includes a display unit to display the at least one object, a touch sensing unit to sense a user touch input, and a controller to control display of the object in response to the touch input, wherein the display device includes the functions of designating a control area to select and control the at least one object in response to a sensed first touch input, generating a target area to move the object included in the control area in response to a sensed second touch input, wherein the target area includes a duplicate object of the object included in the control area, moving the duplicate object in response to a sensed third touch input with respect to a surrounding image of the control object, and displaying the moved target area, and replacing the duplicate object with the object of the control area and deleting a graphic image of the duplicate object, when movement of the duplicate object is completed.

In accordance with a further aspect of the present invention, a display device including a touchscreen that displays at least one object, includes a display unit to display the at least one object, a touch sensing unit to sense a user touch input, and a controller to control display of the object in response to the touch input, wherein the display device includes the functions of setting a particular object as a control area to control the particular object among at least one object in response to a sensed first touch input, generating a duplicate object to move the control object in response to a sensed second touch input, wherein the duplicate object is synchronized with the control object and a surrounding image of the control object is synchronized with a surrounding image of the duplicate object, displaying the surrounding image of the control object and the surrounding object of the duplicate object at both ends of a bar-shaped connection object that connects both the objects to each other, adjusting a displacement of the bar-shaped connection object in response to a sensed third touch input, and moving a position of the control object or the duplicate object based on the adjusted displacement, displaying visual properties of the duplicate object changed in response to a sensed fourth touch input with respect to the control object, and replacing the duplicate object with the control object, and deleting graphic images of the duplicate object and the connection object when change of the duplicate object is completed.

### Advantageous Effects of Invention

According to an embodiment of the present invention, in the case in which the size of a touchscreen is greater than the use radius of a user, the user can control a remote object using a duplicate object and a copy of a surrounding image. Thereby, the user can control the remote object even without changing the user's position.

Further, according to another embodiment of the present invention, in the case in which the size of the touchscreen is greater than the use radius of the user, the user can expediently select and move the remote object regardless of the user's position as a result of using a connection object having various shapes that assists the user in expediently selecting a desired object.

Furthermore, according to another embodiment of the present invention, by allowing the user to control a particular area of the touchscreen regardless of the user's position, it is possible to achieve efficient control of the touchscreen even when a plurality of users performs group work using the touchscreen, which may enhance user convenience.

In addition, according to a further embodiment of the present invention, even in the case in which the size of the touchscreen is greater than the use radius of the user, the user can expediently control a displayed object regardless of the user's position. This facilitates interaction between the user and the display device, thereby enhancing utility of the touchscreen.

More detailed effects of the present invention will be described hereinafter in detail.

### Brief Description of Drawings

The accompanying drawings, which are included to provide a further understanding of the invention and are incorporated in and constitute a part of this application, illustrate embodiment(s) of the invention and together with the description serve to explain the principle of the invention.

In the drawings:
FIG. 1 is a view showing an embodiment in relation to use of a display device including a conventional touchscreen;
FIG. 2 is a view showing another embodiment in relation to use of a display device including a conventional touchscreen;
FIG. 3 is a function block diagram of a display device including a touchscreen according to an embodiment of the present invention;
FIG. 4 is a view showing an embodiment in which a touch input for designating a control area is received in the display device according to the present invention;
FIG. 5 is a view showing an embodiment in which a touch input for generating a target area is received in the display device according to the present invention;
FIG. 6 is a view showing an embodiment in which the target area produced according to the touch input of FIG. 5 is displayed in the display device according to the present invention;
FIG. 7 is a view showing an embodiment in which a target area is moved via a control area in the display device according to the present invention;
FIG. 8 is a view showing an embodiment in which movement of a duplicate object is completed in a manner as shown in FIG. 7 and a control area is deleted in the display device according to the present invention;
FIG. 9, that represents background art that is useful for understanding the invention, is a view showing an embodiment in relation to use of a target area and a control area in the display device according to the present invention;
FIG. 10 is a view showing an embodiment in relation to display of a target area and a control area in the display device according to the present invention;
FIG. 11 is a view showing an embodiment in which a duplicate object is controlled in response to a touch input with respect to a control object in the display device according to the present invention;
FIG. 12, is a view showing another embodiment in which a touch input for designating a control area is received in the display device according to the present invention;
FIG. 13, is a view showing an embodiment in which a touch input for allowing an object to be included in a control area is received in the display device according to the present invention;
FIG. 14, is a view showing another embodiment in relation to use of a control area and a target area in the display device according to the present invention;
FIG. 15, is a view showing an embodiment in relation to selection of a control object in the display device according to the present invention;
FIG. 16 is a view showing an embodiment in relation to display of a particular object of an object list shown in FIG. 15 which is selected as a control object in the display device according to the present invention;
FIG. 17 is a view showing an embodiment in which a touch input for setting a control object is received in the display device according to the present invention;
FIG. 18, is a view showing an embodiment in relation to display of a connection object in the display device according to the present invention;
FIG. 19, is a view showing an embodiment in relation to adjustment in the displacement of a connection object in the display device according to the present invention;
FIG. 20, is a view showing another embodiment in relation to adjustment in the displacement of a connection object in the display device according to the present invention;
FIG. 21, is a view showing an embodiment in which a control object and a duplicate object are connected to each other using a connection object in the display device according to the present invention;
FIG. 22, is a view showing another embodiment in which a duplicate object is controlled in response to a touch input with respect to a control object in the display device according to the present invention;
FIG. 23, is a view showing an embodiment in which a touch input for deleting a connection object is received when change in visual properties of a duplicate object is completed in the display device according to the present invention;
FIG. 24, is a view showing another embodiment in which a touch input for deleting a connection object is received when change in visual properties of a duplicate object is completed in the display device according to the present invention;
FIG. 25, is a view showing an embodiment in relation to omission of a connection object in a manner as shown in FIGS. 23 and 24 in the display device according to the present invention;
FIG. 26, is a view showing an embodiment in relation to use of a connection object in the display device according to the present invention;
FIG. 27, is a view showing another embodiment in relation to use of a connection object in the display device according to the present invention;
FIG. 28 is a view showing an embodiment in relation to control of an object displayed in a 3D space in the display device according to the present invention;
FIG. 29 is a view showing another embodiment in relation to control of an object displayed in a 3D form in the display device according to the present invention;
FIG. 30 is a flowchart of a method for controlling a display device according to an embodiment of the present invention; and
FIG. 31 is a flowchart of a method for controlling a display device according to another embodiment of the present invention.

### Best Mode for Carrying out the Invention

Reference will now be made in detail to the preferred embodiments of the present invention, examples of which are illustrated in the accompanying drawings. The accompanying drawings illustrate exemplary embodiments of the present invention and provide a more detailed description of the present invention. However, the scope of the present invention should not be limited thereto.

Although the terms used in the following description are selected, as much as possible, from general terms that are widely used at present while taking into consideration of the functions obtained in accordance with the present invention, these terms may be replaced by other terms based on intensions of those skilled in the art, customs, emergence of new technologies, or the like. Also, in a particular case, terms that are arbitrarily selected by the applicant of the present invention may be used. In this case, the meanings of these terms may be described in corresponding description parts of the invention. Accordingly, it should be noted that the terms used herein should be construed based on practical meanings thereof and the whole content of this specification, rather than being simply construed based on names of the terms.

A display device, which will be described hereinafter, may be connected to the Internet and a computer under assistance of wireless or wired Internet networks, and may perform several functions, such as E-mail transmission, web browsing, banking, or games, for example. For the sake of these various functions, a standardized universal Operating System (OS) may be used. Moreover, a variety of applications may be freely added to or deleted from universal OS kernels, and therefore a variety of user friendly functions may be performed.

Accordingly, a display device including a touchscreen according to the present invention, for example, may be used in digital signage and a kiosk for use in a digital signage system.

The digital signage is a communication tool capable of leading marketing, advertisement, training effects and customer experience of corporations, and is a digital image device that provides particular information at public places, such as airports, hotels, and hospitals, for example. Also, the kiosk is a display device made to display information for passers.

As described above, the display device according to the present invention may be applied to all devices including a touchscreen that is operated in a conversation mode with a user, or is adapted to receive feedback from the user.

FIG. 3 is a function block diagram of a display device including a touchscreen according to an embodiment of the present invention.

As shown in FIG. 3, the display device 300 according to the embodiment of the present invention may include a touchscreen 310, a network interface 320, an external device interface 330, a memory 340, and a controller 350.

The touchscreen 310 is a screen capable of directly receiving input data thereon when the user's hand or an object touches letters appear on the screen without using a keyboard or a particular position. To this end, the touchscreen 310 may include a touch sensing unit 311 and a display unit 313.

The touch sensing unit 311 senses a contact position between the user's hand or an object and the touchscreen, and to transmit the sensed position to the controller 350. The touch sensing unit 311 may include a touch panel.

The display unit 313 displays a graphic image including letters or pictures to enable reception of a user touch input. The display unit 313 may differently display the graphic image according to a user touch input. As such, the display unit 313 may generate a drive signal by converting, for example, an image signal or data signal processed in the controller 350, or an image signal or data signal received in the external device interface 330 into R, G, and B signals respectively. The display unit 313 may function as a Plasma Display Panel (PDP), a Liquid Crystal Display (LCD), an Organic Light Emitting Diode (OLED), a flexible display, a 3D display, or the like.

However, in consideration of the case in which the size of the touchscreen 310 is greater than the use radius of the user, the present invention is intended to provide the display device 300 that can manage a region of the touchscreen 310 where the user's hand does not reach, or that can facilitate group work when a plurality of users simultaneously uses the touchscreen 310.

Accordingly, the touchscreen 310 according to the present invention refers to a large scale touchscreen, the size of which is greater than the use radius of the user. Here, the use radius refers to a range within which the user can touch the touchscreen 310 using touch means. The touch means may be changed based on a touch recognition method, and may include the user's hand, a pen, and the like. Hereinafter, the user's hand will be described as the touch means for touching the touchscreen by way of example.

As such, the touchscreen 310 may include a region where the user's hand does not reach, and the size of the screen region where the user's hand does not reach may be different on a per user basis. For example, the size of the screen region where the user's hand does not reach may be changed according to the length of the user's arm, and may be changed according to the age and the height of the user.

That is, the touchscreen 310 may have a region where the user cannot touch according to the size of the touchscreen 310 and the length of the user's arm. For example, if at least one of a vertical length and a horizontal length of the touchscreen 310 is greater than the average length of the user's arm (for example, 1.5m in the case of an adult, and 1m in the case of a child), the touchscreen inevitably has a region where the user cannot control without changing user position.

Accordingly, in consideration of the above description, the present invention proposes a method for allowing a user to control an object that exists in a screen region where the user cannot touch. Here, the object is a Graphical User Interface (GUI) unit that can execute or display at least one function in the display device 300 according to the present invention. For example, the object may include a file, a folder, an application, and a widget displayed in the form of an icon. As such, the touchscreen 310 displays at least one object using the display unit 313.

The network interface 320 may include, for example, an Ethernet terminal for the sake of connection with a wired network. Further, for the sake of connection with a wireless network, the network interface 320 may use a certain communication standard, such as, for example, Wireless LAN (WLAN)(Wi-Fi), Wireless Broadband (WiBro), World Interoperability for Microwave Access (WiMax), and High Speed Downlink Packet Access (HSDPA).

The external device interface 330 may connect an external device and the display device 300 to each other. To this end, the external device interface 330 may include an A/V input/output unit (not shown) or a wireless communication unit (not shown).

Accordingly, the external device interface 330 may be connected to the external device, such as a Digital Versatile Disk (DVD), a Blue-ray Disc (BD) player, a game machine, a camera, a camcorder, and a computer (laptop computer), for example, in a wired/wireless manner. Also, the external device interface 330 may receive an application or a list of applications in an adjacent external device, and may transmit the same to the controller 350 or the memory 340.

Also, the external device interface 330 may select and receive a desired one among applications open to the public via a network.

The memory 340 may be realized via, for example, an Electrically Erasable Programmable Read-Only Memory (EEPROM), and may store a program for processing and control of each signal in the controller 350, or may store the processed image, voice, or data signal.

Also, the memory 340 may perform a function for provisional storage of an image, voice, or data signal input from the network interface 320 or the external device interface 330. The memory 340 may store an application or a list of applications input from the external device interface 330 or the network interface 320.

Although not shown in FIG. 3, the display device 300 according to the present invention may further include an audio output unit and a power supply unit.

The audio output unit may receive a voice processed signal from the controller 350, for example, a stereo signal, a 3.1 channel signal, or a 5.1 channel signal to thereby output voice. The audio output unit may be realized as various speakers.

The power supply unit supplies corresponding power throughout the display device 300. For example, the power supply unit may supply power to the controller 350 that can be realized into a System On Chip (SOC) form, the display unit 313 for display of an image, and the audio output unit for audio output.

The controller 350 controls display of an object based on a touch input sensed by the touch sensing unit 311. This will be described hereinafter in detail with reference to the drawings. The following description is generally divided into a first embodiment using a connection object and a second embodiment not using a connection object.

### First Embodiment

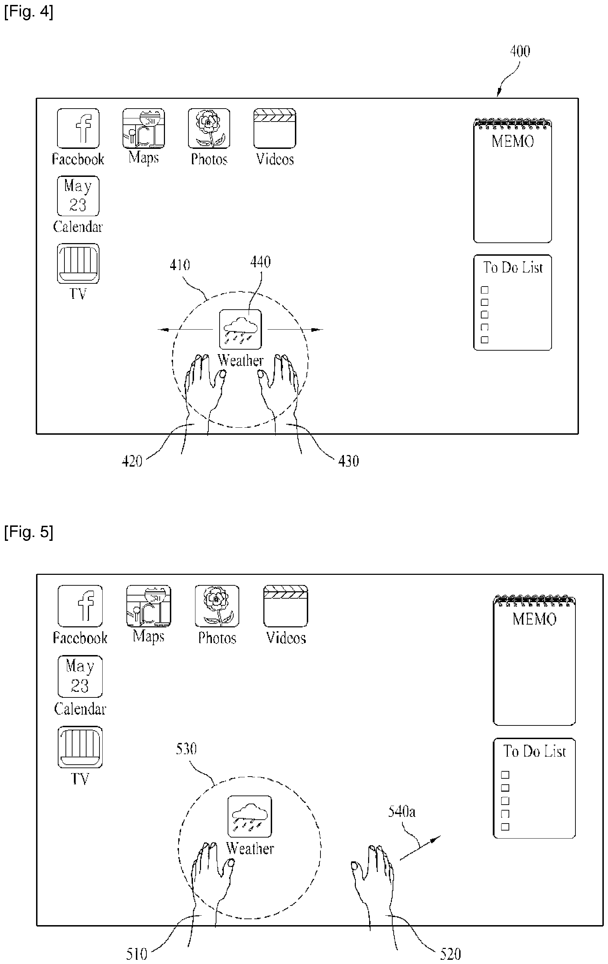

FIG. 4 is a view showing an embodiment in which a touch input for designating a control area is received in the display device according to the present invention.

The display device sets a control area in response to a touch input for generating the control area when the touch sensing unit senses the touch input, and displays the designated control area 410. Here, the control area is an area that receives a touch input for controlling an object and a surrounding image around the object. Thus, the control area may include at least one object.

As shown in FIG. 4, the display device 400 according to the present invention sets and displays the control area 410 in response to a touch input of pushing the user's left hand 420 leftward and the user's right hand 430 rightward respectively, in order to allow an object 440 that the user wishes to control to be included in the control area 410.

Although a touch input for generating the control area may be the touch input of dragging both hands leftward and rightward simultaneously as shown in FIG. 4, the present invention is not limited thereto. Thus, the touch input for generating the control area may include a drag touch input for directly designating a control area and a touch input for selecting a particular object, and may include various other preset touch inputs.

The display device also produces a target area required to move the object included in the control area in response to a touch input for generating the target area when the touch sensing unit senses the touch input. The target area includes a duplicate object that is a copy of the object included in the control area.

FIG. 5 is a view showing an embodiment in which a touch input for generating a target area is received in the display device according to the present invention. As shown in FIG. 5, the touch input for generating the target area may include a touch input of continuously touching a control area 530 with the user's user left hand 510 and dragging the user's right hand 520 in a specific direction 540a. Of course, as shown in FIG. 5, the touch input for generating the target area may include a touch input of drawing a pattern, such as a circle, with the user's right hand 520, and may include various other preset touch inputs of drawing various patterns.

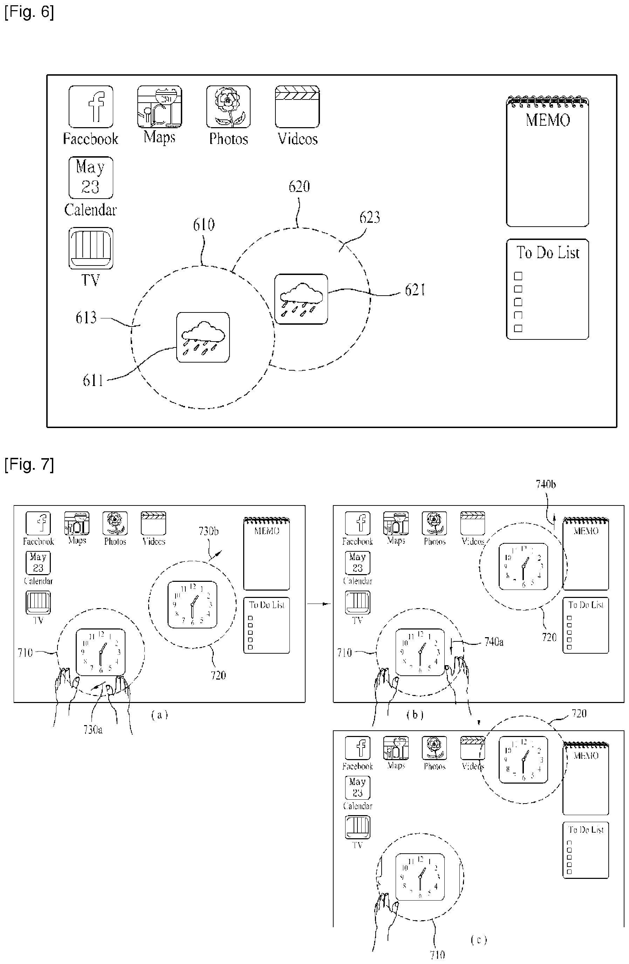

FIG. 6 is a view showing an embodiment in which the target area produced according to the touch input of FIG. 5 is displayed in the display device according to the present invention. As shown in FIG. 6, a control area 610 includes an object 611 that the user wishes to control, and a surrounding image 613 around the object 611. Also, a target area 620 includes a duplicate object 621 that is a copy of the object 611 included in the control area 610, and a surrounding image 623 around the duplicate object 621.

The display device may display the target area 620 by imparting graphic effects, distinguishable from a graphic image of the control area 610, to the target area 620. Here, the distinguishable graphic effects include, for example, chromaticity, transparency, and size, and refer to graphic effects obtained when user recognizable visual factors are displayed in different ways.

In the following description, an original object included in a control area is referred to as a control object, and an object included in a target area is referred to as a duplicate object.

The display device synchronizes and displays the duplicate object 621 of the target area 620 with the control object 611. Also, the display device synchronizes and displays the surrounding image 613 of the control area 610 with the surrounding image 623 of the target area 620. In other words, the duplicate object 621 is synchronized and displayed as the user controls the control object 611, whereas the surrounding image 613 of the control object 611 is synchronized and displayed with the surrounding image 623 of the duplicate object 621 that varies according to movement of the duplicate object 621.

That is, the display device controls a duplicate object simultaneously with a user touch input with respect to a control object, moves the duplicate object in response to a user touch input with respect to a surrounding image of the control object, and controls display of a changed target area. This will be described hereinafter in detail with reference to FIG. 7.

FIG. 7 is a view showing an embodiment in which the target area is moved through the control area in the display device according to the present invention.

As shown in FIG. 7(a), in response to a user touch input with respect to a surrounding image included in a control area 710, the display device moves a duplicate object in an opposite direction 730b of a user touch input direction 730a, and displays a changed target area 720.

In this case, the user's left hand remains touching the control area 710, and the user's right hand performs touching on the surrounding image included in the control area 710. Alternatively, differently from the illustration of FIG. 7, the display device may cause a duplicate object to be moved even when the user touches the surrounding image by only one hand.

The user touch input with respect to the surrounding image of the control area 710 is a touch input for moving the duplicate object. As such, the display device moves the duplicate object in the opposite direction 730b of the user touch input direction 730a when the touch sensing unit senses the user touch input, and displays the moved target area 720.

In this case, the display device may set various movement manners of the duplicate object based on, for example, a user touch input speed and a dragging length with respect to the surrounding image of the control area. In one example, the display device may display the duplicate object as if it goes straight to a particular position in the opposite direction 730b, or may display the duplicate object as if it moves to allow the user to know a movement path to the particular position in the opposite direction 730b.

FIG. 7(b) is a view showing an embodiment in which when the user performs an additional touch input with respect to the surrounding image included in the control area 710 shown in FIG. 7(a), the display device moves the duplicate object in an opposite direction 740b of a touch input direction 740a, and displays the moved target area 720.

As described above, when it is desired to control a wider touch screen than the use radius of the user, the display device according to the present invention can locate an object at a desired position by means of a control area and a target area including a duplicate object. In this way, the display device has an advantage in that the user can confirm whether the duplicate object is located at a desired position through the target area 720 as shown in FIG. 7(c), and if the duplicate object is not located at the desired position, the user can expediently perform position adjustment.

In the meantime, the display device detects whether movement of the duplicate object is completed. If it is detected that movement of the duplicate object is completed, the display device deletes a graphic image of the control object included in the control area, and displays the duplicate object as the control object. That is, the display device replaces the duplicate object with the control object and deletes the graphic image of the duplicate object.

More specifically, if movement of the duplicate object is completed, the display device displays the control object at a position where the duplicate object was displayed, and deletes the control area. It is noted that the duplicate object and the control object have the same graphic image to be seen by the user although they are at different positions. Thus, although the user simply recognizes that the control object disappears, the display device judges that the duplicate object disappears, and thus manages the control object by updating position information, etc. on the control object via, for example, the memory or the controller. That is, the display device displays the control object as an original object at the position where the duplicate object was displayed.

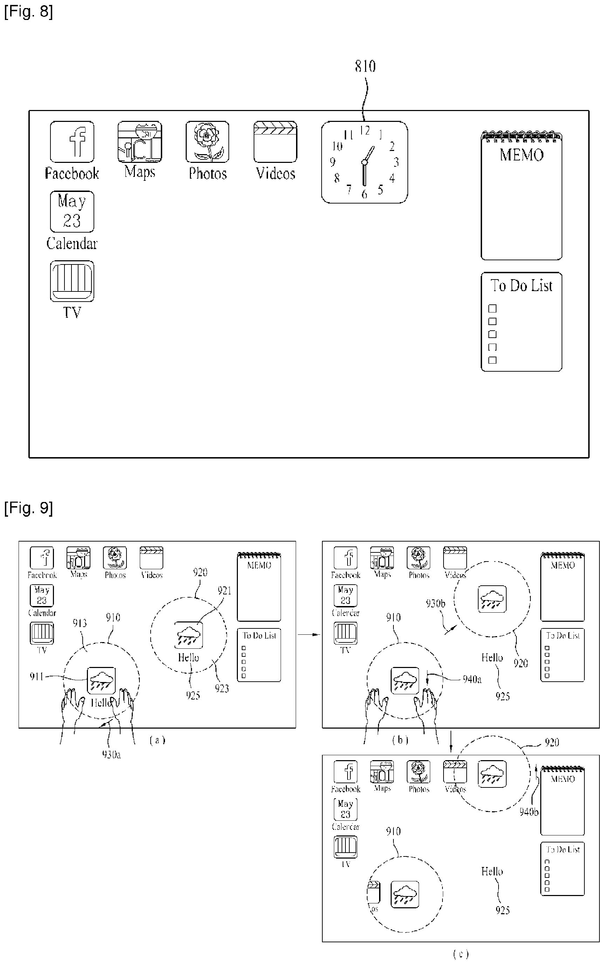

FIG. 8 is a view showing an embodiment in which movement of a duplicate object is completed in a manner as shown in FIG. 7 and a control area is deleted in the display device according to the present invention. As shown in FIG. 8, the display device deletes the control area 710 shown in FIG. 7(c), displays the duplicate object of the target area as an original object 810, and does not display the target area.

In this case, if a touch input is not received for a preset time period or if a touch input of a preset pattern for deleting the control area is received, the display device may detect that movement of the duplicate object is completed.

The preset pattern of the touch input for deleting the control area may be changed based on setting conditions. Also, in addition to using the touch pattern, the touch input for deleting the control area may be set in various ways using the number of touch actions.

FIG. 9 is a view showing an embodiment in relation to use of a target area and a control area in the display device according to the present invention. As described above, the display device moves a duplicate object 921 when sensing a user touch input with respect to a control area 910. The display device displays a target area 920 that is changed to include the moved duplicate object 921, and synchronizes a surrounding image 913 of a control object 911 with a surrounding image 923 of the duplicate object 921.

When the user locates another object or inputs letters on the surrounding image 913 of the control area 910, the same object or letters are also displayed on the surrounding image 923 of the target area 920.

As shown in FIG. 9(a), if the user inputs the letters "Hello" on the surrounding image 913 of the control area 910, the word "Hello" 925 input by the user is synchronized and displayed even on the target area 920.

That is, if there exists the object or letters that are additionally input or newly located, differently from the above description, the surrounding image of the target area may be synchronized with the surrounding image of the control area.

However, it is noted that the case of synchronizing the surrounding image of the target area with the surrounding image of the control area is only the case in which the user newly adds an object, letters, and the like to the surrounding image of the control area. Once the duplicate object is again moved, as described above, the surrounding image of the control area is synchronized with the surrounding image of the target area.

More specifically, if the display device receives a user touch input in a specific direction 930a with respect to the surrounding image 913 of the control object 911 as shown in FIG. 9(a), the display device moves the duplicate object 921 in an opposite direction 930b of the touch input direction 930a as shown in FIG. 9(b).

In this case, the object or letters 925 located on the surrounding image 923 are fixed at the corresponding position, and are managed separately from the duplicate object 921. This is because the surrounding image 923 of the duplicate object 921 is simply an image located around the duplicate object 921. Accordingly, the surrounding image 913 of the control area 910 is synchronized with the surrounding image 923 of the target area 920.

If the display device no longer receives a user touch input with respect to the control area 910, as shown in FIG. 9(c), the display device deletes the control area 910, and displays the duplicate object as the control object at a position where the duplicate object was displayed. The display device also deletes the target area 920. However, the display device continues displaying the letters 925 additionally input by the user at the corresponding initial input position regardless of whether the control area and the target area are displayed.

As shown in FIG. 9, the display device may allow the letters input by the user to be moved along with the duplicate object as a set. Whether to move the letters and the duplicate object as a set may be preset.

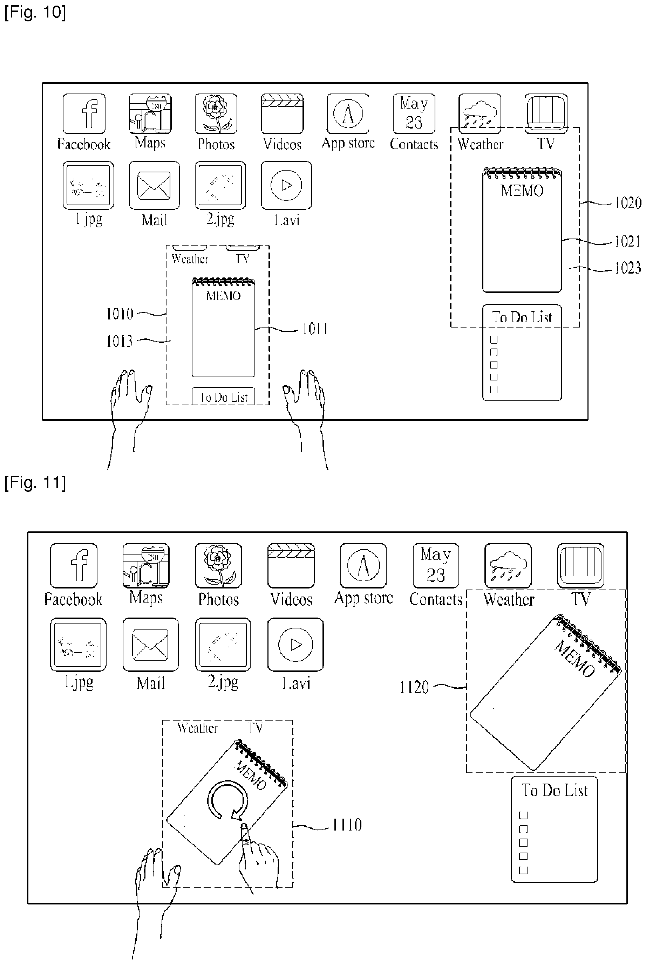

FIG. 10 is a view showing an embodiment in relation to display of a target area and a control area in the display device according to the present invention. As described above, the display device synchronizes and displays a surrounding image 1013 of a control area 1010 with a surrounding image 1023 of a target area 1020.

The surrounding image 1023 of the target area 1020 is an image within a preset range around a duplicate object 1021. Thus, as shown in FIG. 10, the surrounding image 1023 of the target area 1020 may include a part of a graphic image of another object displayed around the duplicate object 1021. Also, a part of the graphic image of another object included in the surrounding image 1023 of the duplicate object 1021 is synchronized with the surrounding image 1013 of the control object 1011 to thereby be displayed on the surrounding image 1013. As such, when the user performs a touch input for moving a position of the duplicate object, there is an advantage in that the user can more accurately adjust a positional relationship between the duplicate object and other surrounding objects.

FIG. 11 is a view showing an embodiment in which a duplicate object is controlled in response to a touch input with respect to a control object in the display device according to the present invention.

The display device displays a control object 1110, visual properties of which are changed in response to a touch input for changing the visual properties when the touch sensing unit senses the touch input. At the same time, the display device displays a changed duplicate object 1120 synchronized with the control object 1110.

Here, the visual properties may include at least one of the angle, size, position and color of a displayed object, and refer to factors that will be considered when an object is displayed on a screen. FIG. 11 shows a touch input for changing the angle of a displayed object as one example of the touch input for changing the visual properties.

Accordingly, when the user adjusts the control object 1120, it can be recognized as if the duplicate object 1120 is adjusted. As such, the user may expediently adjust the duplicate object 1120 located distantly by adjusting the control object 1110 located closely.

In the meantime, in the case in which the display device receives a touch input for designating a control area, the display device may display an area that receives the touch input by imparting graphic effects to the area. The graphic effects may include all effects obtained by means for imparting visual differences by changing, for example, chromaticity, transparency, and texture in order to distinguish the area that receives the touch input from other areas.

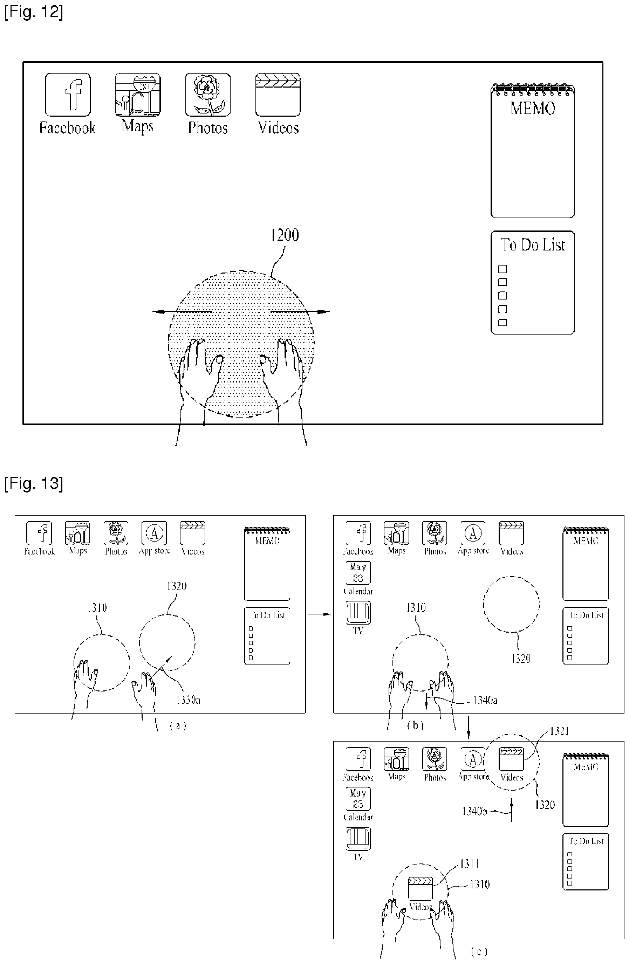

FIG. 12 is a view showing another embodiment in which a touch input for designating a control area is received in the display device according to the present invention. Differently from FIG. 4, in FIG. 12, there is no object displayed in an area 1200 that receives a user touch input for designating a control area.

In the case in which no displayed object is included in an area to which graphic effects are imparted as described above, the display device may receive a touch input for moving the area, to which graphic effects are imparted, such that the area includes an object. This will be described in detail with reference to FIG. 13.

FIG. 13 is a view showing an embodiment in which a touch input for allowing an object to be included in a control area is received in the display device according to the present invention.

In the case in which no displayed object is included in a control area 1310 that is set in response to a touch input received from the user, the display device may display a target area 1320 for moving the control area 1310 as shown in FIG. 13(a). If the control area 1310 includes no displayed object, the display device may automatically produce and display the target area 1320 regardless of a user touch input, or may produce and display the target area 1320 when receiving an additional user touch input.

As shown in FIG. 13(a), when the display device displays the target area 1320, the user may adjust the control area 1310 so as to include an object using the target area 1320.

The display device, as shown in FIG. 13(b), moves the target area 1320 in response to a user touch input with respect to the control area 1310, thereby allowing an object that the user wishes to control to be included in the target area 1320 as shown in FIG. 13(c).

More specifically, if the display device receives a touch input of dragging the control area 1310 in a specific direction 1340a from the user, the display device moves the target area 1320 in response to the touch input. In FIG. 9, the display device has been described as moving a duplicate object in response to a user touch input, and changing and displaying a target area to correspond to the moved duplicate object. On the other hand, the display device of FIG. 13 has a difference in that the target area itself is moved in response to the user touch input.

In this case, the display device moves the target area 1320 in response to the user touch input of dragging the control area 1310 in the specific direction 1340a. This movement of the target area 1320 may be set in various ways.

For example, the display device may allow the target area 1320 to be moved in the specific direction 1340a by a preset distance simply in response to a touch input regardless of a drag time or drag distance of the touch input with respect to the control area 1310. Alternatively, the display device may allow the target area 1320 to be moved in the specific direction 1340a in proportion to the drag time of the touch input with respect to the control area 1310.

Further, the display device may allow the target area 1320 to be moved in the specific direction 1340a in proportion to the drag speed of the touch input with respect to the control area 1310. However, it will be appreciated that the display device may allow the target area 1320 to be moved in the specific direction 1340a based on graphic effects regardless of the speed or time of the touch input with respect to the control area 1310.

Furthermore, the display device may allow the target area 1320 to be displayed at one go at a particular position in the specific direction 1340a in response to a touch input with respect to the control area 1310, or may allow the target area 1320 to be progressively moved to the particular position in the specific direction 1340a along a given movement path in response to a touch input with respect to the control area 1310.

The display device may set the target area 1320 so as to be moved in an opposite direction of the touch input direction with respect to the control area 1310, or may set the target area 1320 so as to be moved in the same direction as the touch input direction with respect to the control area 1310.

As shown in FIG. 13(a), the touch input with respect to the control area 1310 may include a left hand touch input of continuously touching the control area 1310 by the user's left hand to keep the control area 1310 stationary, and a right hand touch input of dragging the control area 1310 in a specific direction 1330a by the user's right hand.

In this case, to assist the user in expediently keeping the control area 1310 stationary by the user's left hand, the display device may display a graphic image to be indicated by the user's left hand in the control area 1310. The graphic image to be indicated by the user's left hand may be selected from various images including, for example, pointer and flag images.

However, it will be appreciated that, in the case of the touch input with respect to the control area 1310 is a touch input using both hands, roles of the right hand and the left hand may be exchanged differently from FIG. 13(b). As such, the touch input with respect to the control area 1310 may be a both hands touch input or a single hand touch input, and may be performed in various ways rather than being limited to a particular touch input manner.

As shown in FIG. 13(c), if a displayed object 1321 is included in the moved target area 1320, the display device displays a copy of the object 1321 included in the target area 1320 in the control area 1310. The display device sets the object 1321 included in the target area 1320 as a duplicate object, and an object 1311 included in the control area 1310 as a control object.

Then, the display device synchronizes the duplicate object 1321 with the control object 1311, and synchronizes a surrounding image of the control object 1311 with a surrounding image of the duplicate object 1321.

Thereby, as described above with reference to FIGs. 9 and 11, the display device may change the position and visual properties of the duplicate object 1321 included in the target area 1320 using the control area 1310 and the control object 1311.

In the meantime, the display device may move the target area 1320 and the duplicate object 1321 as described above with reference to FIG. 7 via the control area 1310 and the control object 1311, and may change the visual properties of the duplicate object 1320 as described above with reference to FIG. 11.

If the display device detects that movement of the duplicate object 1321 and change in the visual properties of the duplicate object 1321 are completed, as described above with reference to FIG. 8, the display device deletes a graphic image of the control area 1310, and again displays the duplicate object 1321 as an original object.

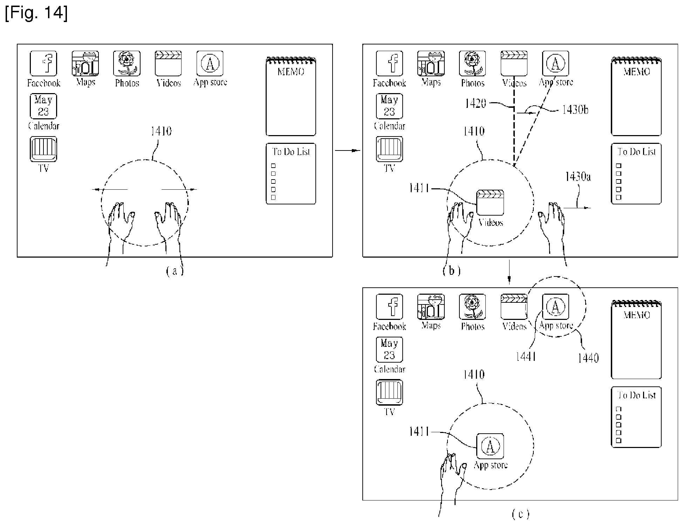

FIG. 14 is a view showing another embodiment in relation to use of a control area and a target area in the display device according to the present invention.

As shown in FIG. 14(a), the display device according to the present invention may receive a touch input for designating a control area from the user. As described above with reference to FIG. 12, this is equal to the case in which no object is displayed in an area 1410 that receives the touch input for designating the control area from the user.

In this case, the user may select an object to be included in the control area. As shown in FIG. 14(b), the display device performs display of a connection line 1420 simultaneously with display of the designated control area 1410. The connection line 1420 is used to select an object to be controlled via the control area 1410, and is connected to the selected object. The display device further displays a copy of the object connected to the connection line 1420 as a control object 1411 in the control area 1410.

As shown in FIG. 14(b), the display device controls the connection line 1420 so as to be moved in a direction 1430b on the basis of the control area 1410. Here, the direction 1430b corresponds to a user touch input direction 1430a with respect to the control area 1410. Thus, the kind of the object to the displayed in the control area 1410 may be changed according to the user touch input.

The connection line 1420 is given to assist the user in clearly knowing the object to be controlled. To this end, the connection line 1420 may be adjustable in terms of direction and length as shown in FIG. 14(b). The adjustment in the length of the connection line 1420 has the effect of assisting the user in easily selecting the object to be controlled in the case in which several objects are displayed in the same direction.

Also, if a touch input is not input for a preset time period in a state as shown in FIG. 14(b), or if the display device receives a touch input of a preset pattern for releasing the connection line 1420, as shown in FIG. 14(c), the display device displays a target area 1440 including the object connected to the connection line 1420, and deletes the connection line 1420.

The display device sets an object 1441 included in the target area 1440 as a duplicate object, and the object 1411 included in the control area 1410 as a control object.

The subsequent operation is equal to the above description with reference to FIGs. 7, 8 and 11. That is, the display device may move the target area 1440 and the duplicate object 1441 and may change the visual properties of the duplicate object 1441 via the control area 1410 and the control object 1411. If it is detected that movement and change in the visual properties of the duplicate object 1411 are completed, the display device deletes the graphic image of the control area 1410, and again displays the duplicate object 1441 as an original object. That is, the display device replaces the duplicate object with the original object and deletes the graphic image of the duplicate object and surrounding image of the duplicate object.

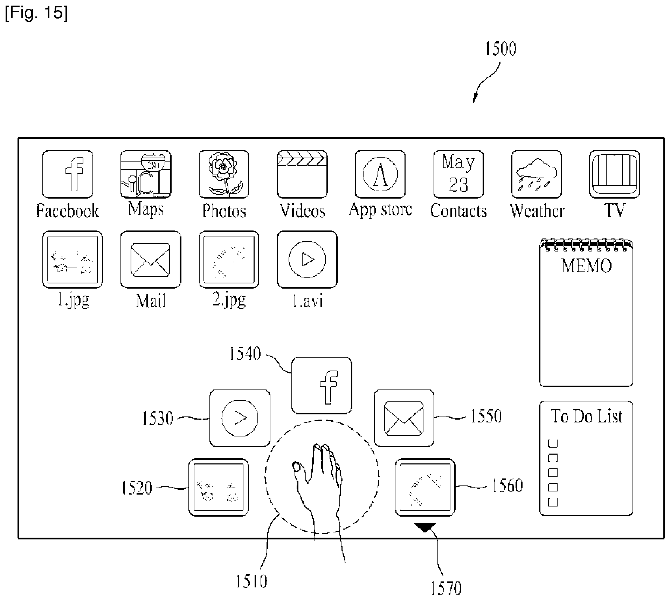

FIG. 15 is a view showing an embodiment in relation to selection of a control object in the display device according to the present invention. In the case in which no object is displayed in an area 1510 that receives a user touch input for designating a control area, a display device 1500 may display a list of objects 1520, 1530, 1540, 1550 and 1560 that have been recently used.

The display device may generate the object list in the sequence from the last used object 1520 to the oldest object 1550 used. Alternatively, the display device may generate the object list in the sequence from the object 1520 having the highest frequency of use to the object 1550 having the lowest frequency of use.

If the object list contains a greater number of objects than a preset value, the display device 1500 may include an arrow menu 1570. As such, if the user selects the arrow menu 1570, the display device controls display of the object list in such a way that the left-most object 1520 disappears, the other objects of the object list are moved one by one in a counterclockwise direction, and a new object is displayed at a right-most position.

Although the arrow menu 1570 is illustrated as being displayed at the right side of the object list, the arrow menu may be displayed at the left side or at either side of the object list, and the position of the arrow menu is not limited to the embodiment of FIG. 15.

As described above, by generating and displaying the object list to enable that the user can select a desired object from the object list, there is an advantage in that the user can expediently and rapidly select an object that the user wishes to control.

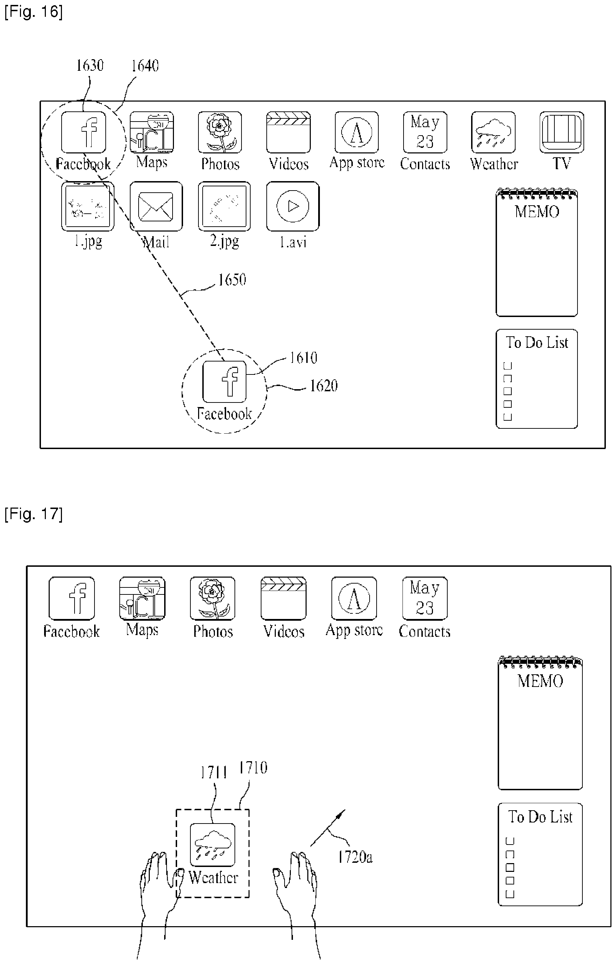

FIG. 16 is a view showing an embodiment in relation to display of a particular object of the object list shown in FIG. 15 which is selected as a control object in the display device according to the present invention.

In FIG. 15, if the user selects the object 1540 to be controlled from the object list, the display device sets the selected object 1540 as a control object. Thus, the display device sets a control area 1620 so as to include a control object 1610, and displays the control area 1620 including the control object 1610. The display device further displays a duplicate object 1630 at a position where the selected object 1540 was displayed, and displays a target area 1640 so as to include the duplicate object 1630.

The display device may display a connection line 1650 that connects the target area 1640 and the control area 1620 to each other, in order to assist the user in clearly recognizing a position of the target area 1640. The display device may move the duplicate object 1630 in response to a touch input for moving the connection line 1650, or may move the duplicate object 1630 in response to a touch input with respect to a surrounding image included in the control area 1620.

### Second Embodiment

FIG. 17 is a view showing an embodiment in which a touch input for setting a control object is received in the display device according to the present invention.

If the display device receives a touch input for designating a control area sensed via the touch sensing unit, the display device sets an object displayed in an area that receives the touch input as a control object 1711, and sets a control area 1710 including the control object 1711.

If the display device receives a touch input for generating a duplicate object sensed via the touch sensing unit, the display device produces a duplicate object. The duplicate object is a copy of the control object 1711 and is produced as means for moving the control object 1711. The display device synchronizes the duplicate object with the control object, and synchronizes a surrounding image of the control object with a surrounding image of the duplicate object.

The touch input for generating the duplicate object, as shown in FIG. 17, may be a left hand touch input of touching the control area 1710 to keep the control area 1710 stationary, and a right hand touch input of dragging the control area 1710 in a specific direction 1720a. Of course, the touch input for generating the duplicate object is not limited to the both hands touch input, and may be a touch input using a single hand. Also, the touch input for generating the duplicate object is not limited to a touch input using a preset pattern or a specific number of touch actions, and may be changed based on preset conditions.

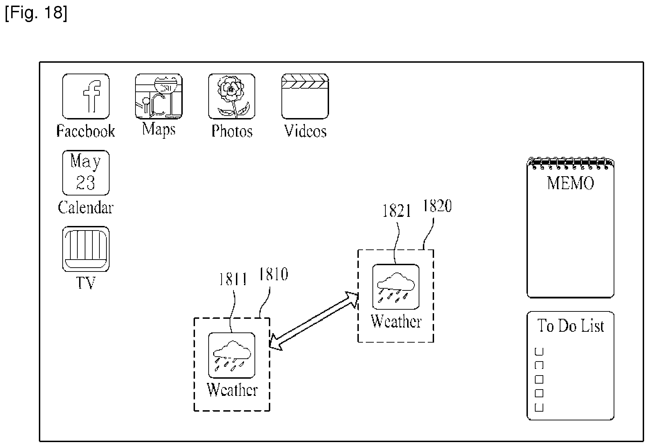

FIG. 18 is a view showing an embodiment in relation to display of a connection object in the display device according to the present invention. The display device displays a duplicate object 1821 and a target area 1820 including the duplicate object 1821 in response to the above described touch input as shown in FIG. 17.

The display device further displays a connection object 1830. The connection object 1830 is a bar-shaped object for connecting objects to each other, and the control area 1810 and the target area 1820 are displayed at both ends of the connection object 1830.

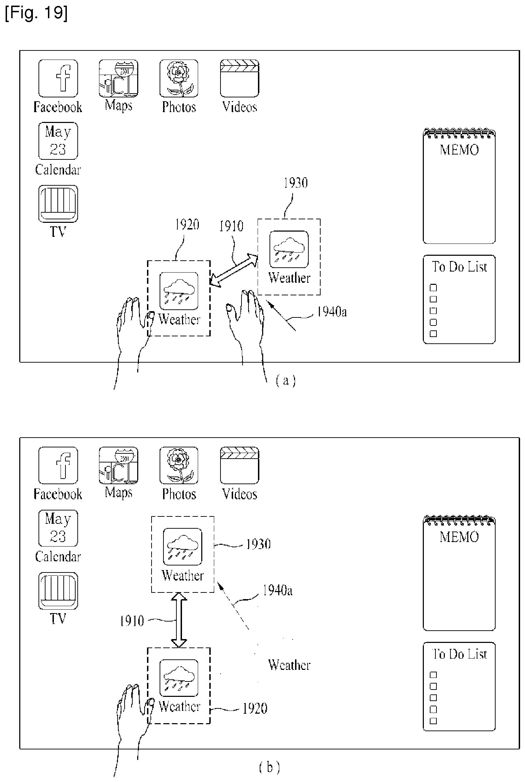

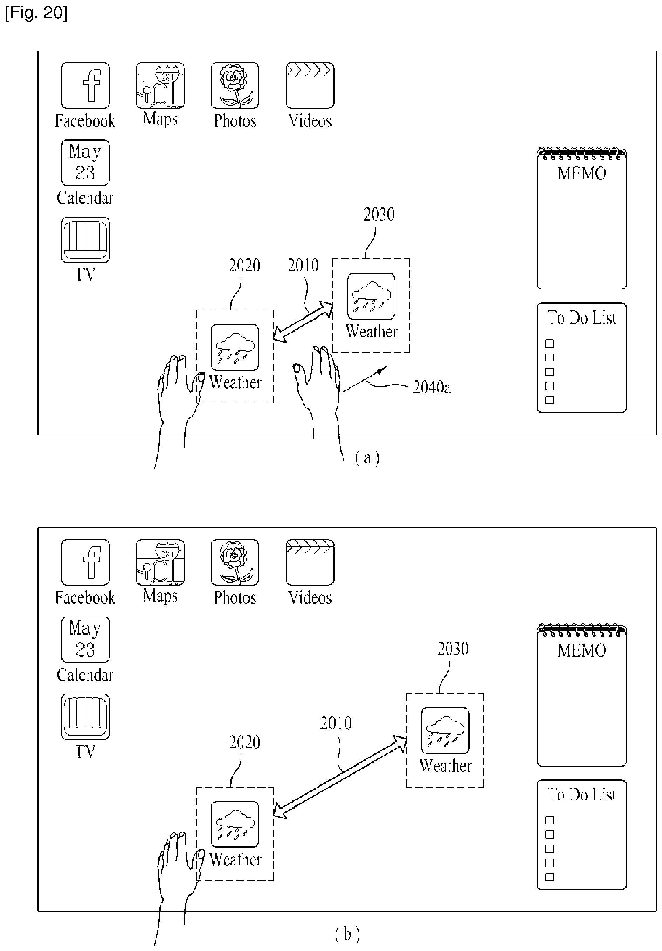

If the touch sensing unit senses a touch input for adjusting the displacement of the connection object 1830, the display device adjusts the displacement of the connection object 1830 in response to the touch input and displays the adjusted displacement of the connection object 1830. Then, the display device moves a position of the control object or the duplicate object based on the adjusted displacement of the connection object 1830. The displacement of the connection object 1830 may include at least one of the length and the angle of the connection object 1830. This will be described hereinafter in detail with reference to FIGs. 19 and 20.

FIG. 19 is a view showing an embodiment in relation to adjustment in the displacement of a connection object in the display device according to the present invention. More particularly, FIG. 19 shows a procedure of adjusting the angle of the connection object.

As shown in FIG. 19(a), the display device may receive a touch input for adjusting the direction of a connection object 1910 from the user. If a received touch input direction 1940a does not coincide with the displayed direction of the bar-shaped connection object 1910, the display device recognizes the touch input as a touch input for adjusting the angle of the connection object 1910.

Thereby, as shown in FIG. 19(b), the display device adjusts the angle of the connection object 1910 by pivoting the connection object 1910 in the touch input direction 1940a about a control area 1920. Also, the display device controls display of the control area 1920 and a target area 1930 at both ends of the adjusted connection object 1910.

As described above, it is possible for the user to easily move a position of the duplicate object included in the target area using the connection object. In this way, the display device according to the present invention has the effect of providing the user with an expedient user interface when using a touch screen having a greater size than the use radius of the user.

FIG. 20 is a view showing another embodiment in relation to adjustment in the displacement of a connection object in the display device according to the present invention. More particularly, FIG. 20 shows a procedure of adjusting the length of the connection object.

As shown in FIG. 20(a), the display device may receive a touch input for adjusting the length of a connection object 2010 from the user. If a received touch input direction 2040a does not coincide with the displayed direction of the bar-shaped connection object 2010, the display device recognizes the touch input as a touch input for adjusting the length of the connection object 2010.

Thereby, as shown in FIG. 20(b), the display device increases the length of the connection object 2010 in the touch input direction 2040a about a control area 2020, and displays the increased length of the connection object 2010. Also, the display device controls display of the control area 2020 and a target area 2030 at both ends of the adjusted connection object 2010.

As shown in FIG. 20, the user can move the target area such that the target area is located closer to the control area via a touch input for reducing the length of the connection object. In this way, the user can locate the target area at a desired place by adjusting, for example, the angle and the length of the connection object.

As such, the display device may control adjustment of the angle or direction as shown in FIG. 19 if the touch input direction with respect to the connection object differs from the displayed direction of the connection object. Also, the display device may control adjustment of the length as shown in FIG. 20 if the touch input direction with respect to the connection object coincides with the displayed direction of the connection object.

However, even if the touch input direction with respect to the connection object does not accurately coincide with the displayed direction of the connection object, the display device may recognize the two directions as the same direction if they are included within a preset range near the connection object.

Accordingly, the display device may be operated to meet the user's demand and may enhance user convenience by expanding the range of a touch input for adjusting the length of the connection object.

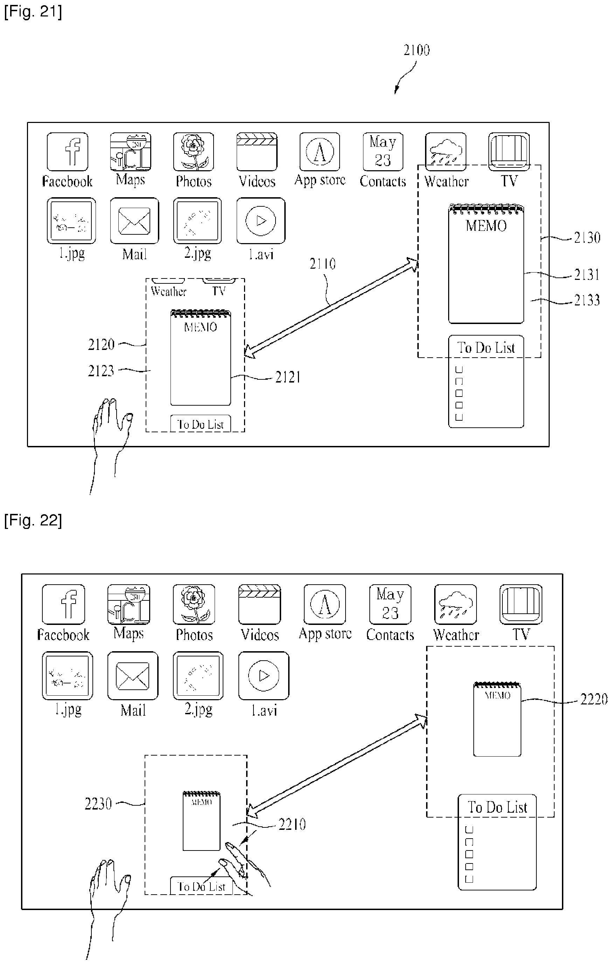

FIG. 21 is a view showing an embodiment in which a control object and a duplicate object are connected to each other using a connection object in the display device according to the present invention.

As shown in FIG. 21, a connection object 2110 connects a control object 2121 and a duplicate object 2131 to each other. Thereby, the user can intuitively know a connection relationship between the control object 2121 and the duplicate object 2131, and may expediently move the duplicate object 2131.

In this case, the connection object 2110 is displayed as if it connects a control area 2120 including the control object 2121 and a target area 2130 including the duplicate object 2131 to each other, rather than directly connecting the two objects to each other.

Accordingly, as the connection object 2110 connects the control area 2120 and the target area 2130, including the objects as well as surrounding images of the objects, to each other, the display device 2100 has an advantage of allowing the user to more clearly know a relationship between the objects and surrounding objects thereof when moving the duplicate object 2131 via the control object 2121. As shown in FIG. 21, since surrounding images 2123 and 2133 include parts of graphic images of surrounding objects, the user can more precisely set the position of the control object 2121.

Also, when the display device receives a touch input with respect to the surrounding image 2123 of the control object 2121 from the user, the display device may move the position of the duplicate object 2131 in response to the touch input.

More specifically, the display device moves the position of the duplicate object 2131 in an opposite direction of a touch input for adjusting the surrounding image 2123 of the control object 2121. Thereby, the user can move the duplicate object 2131 by moving the surrounding image 2123 as background of the control object 2121 even without using the connection object 2110.

In the meantime, the display device may impart graphic effects by differentiating, for example, chromaticity, transparency, and size to distinguish a graphic image of the duplicate object 2131 from a graphic image of the control object 2121. Also, the display device may impart graphic effects to distinguish the surrounding image 2133 of the duplicate object 2131 from the surrounding image 2123 of the control object 2121.

The display device may impart graphic effects to distinguish the control area 2120 from the target area 2130 without separately processing the objects and the surrounding images thereof.

FIG. 22 is a view showing another embodiment in which a duplicate object is controlled in response to a touch input for adjusting a control object in the display device according to the present invention.

If the touch sensing unit senses a touch input for changing visual properties of a control object 2210, the display device displays the control object 2210, the visual properties of which are changed in response to the touch input. At the same time, the display device displays a changed duplicate object 2220 synchronized with the control object 2210.

The visual properties may include at least one of the angle, size, position and color of the displayed object. FIG. 22 shows an embodiment in which the size of the object among the visual properties is changed.

The touch input for changing the visual properties may include a left hand touch input of touching a control area 2330 to keep the control area 2330 stationary, and a right hand touch input of changing a drag direction based on whether to increase or decrease the size of the control area 2330. The touch input for changing the visual properties may be a touch input using a single hand, and may be changed based on preset conditions including the number of touch actions, a touch time, and a touch pressure, for example.

As such, the memory may store a command on a per touch input pattern basis. The display device may acquire a command corresponding to a recognized touch input pattern with reference to the memory, and may execute the corresponding command. The command includes a command for changing visual properties.

For example, as shown in FIG. 22, a touch input pattern of continuously touching the control area 2230 by one hand and dragging the control object 2210 included in the control area 2230 using two fingers of the other hand may match with a command for reducing the size of the control object 2210.

As such, the user can adjust the duplicate object 2220 located distantly by adjusting the control object 2210 located closely.

In the meantime, the display device detects whether movement and change in the visual properties of a duplicate object are completed. If completion of movement and change in the visual properties of the duplicate object is detected, the display device deletes a graphic image of a control object included in a control area and displays the duplicate object as an original object. In other words, the display device replaces the duplicate object with original object and deletes a graphic image of duplicate object, when the completion of movement of the duplicate object is detected.

That is, if movement and change in the visual properties of the duplicate object are completed, the display device displays the control object as an original object at a position where the duplicate object was displayed, and deletes graphic images of the control area and a connection object.

It is noted that the duplicate object and the control object have the same graphic image to be seen by the user although they are at different positions. Thus, although the user simply recognizes that the control object disappears, the display device deletes the duplicate object and manages the control object as an original object by updating position information, etc. on the control object via, for example, the memory or the controller. That is, the display device replaces the duplicate object with the control object.

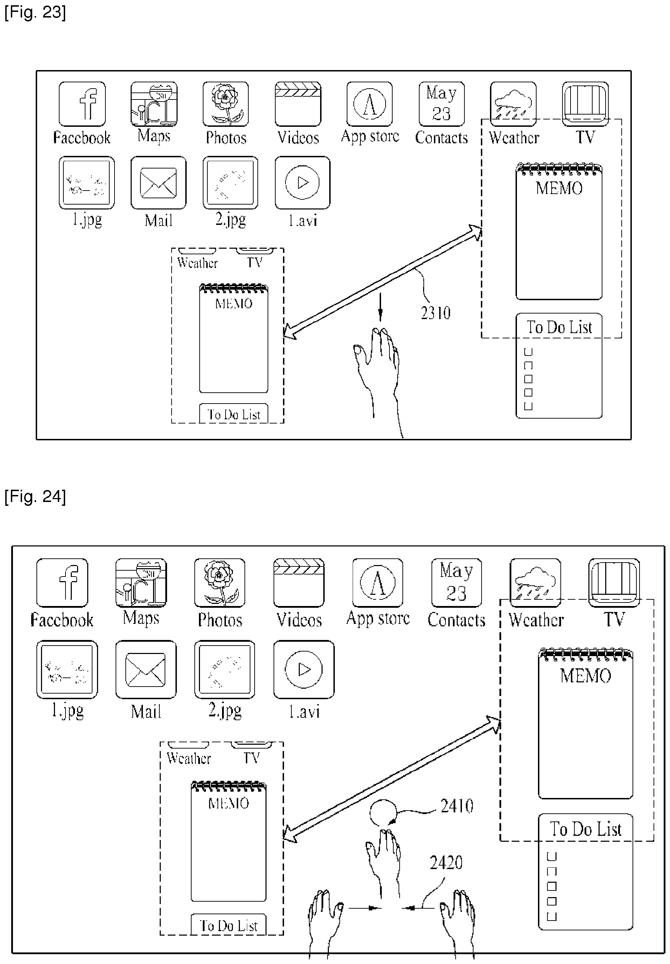

FIG. 23 is a view showing an embodiment in which a touch input for deleting a connection object is received when change in visual properties of a duplicate object is completed in the display device according to the present invention. In this case, it is assumed that change in visual properties is performed after completion of movement of the duplicate object.

Completion of change in the visual properties of the duplicate object may be detected when a touch input of a preset pattern is not input for a preset time period.

Also, completion of change in the visual properties of the duplicate object may be detected when the touch sensing unit receives a touch input of a preset pattern for deleting the connection object 2310.

The preset pattern, as shown in FIG. 23, may be a pattern of dragging the connection object 2310 downward, or may be changed based on preset conditions.

FIG. 24 is a view showing another embodiment in which a touch input for deleting a connection object is received when change in visual properties of a duplicate object is completed in the display device according to the present invention.

The touch input for deleting a control area, as shown in FIG. 24, may be realized in various ways including a touch input 2410 of drawing a circle by one hand and a touch input 2420 of gathering both hands to the center, and is not limited to a particular way.

To this end, the display device may store a command for deleting a control area, which is defined based on a pattern shape, the number of touch actions, and the like, in the memory. Thereby, if the display device senses a touch input of a certain pattern or of a predetermined number of touch actions, the display device may execute a matched command with reference to the memory.

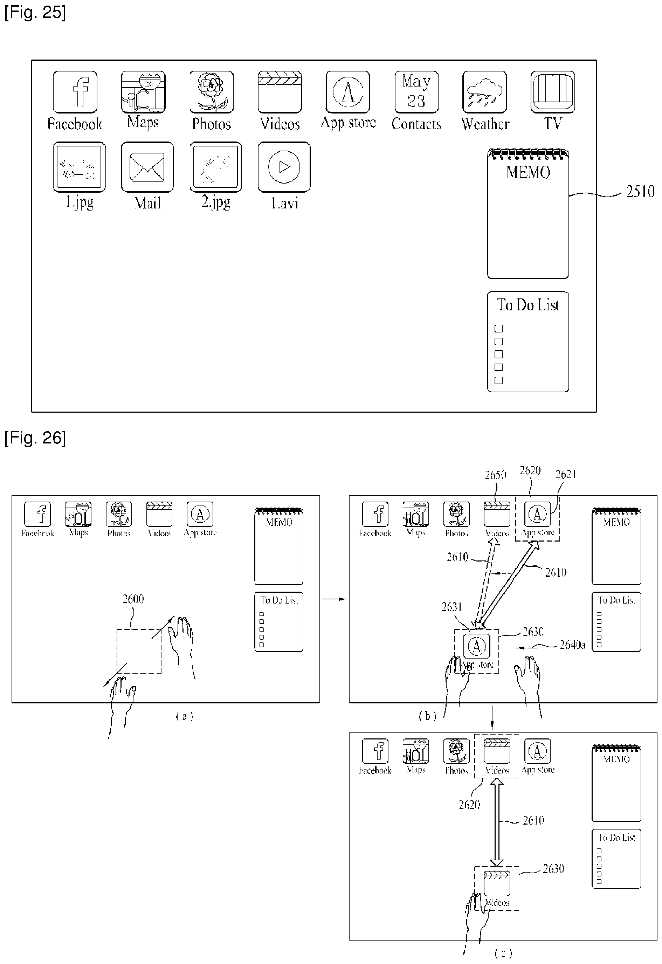

FIG. 25 is a view showing an embodiment in relation to omission of a connection object in a manner as shown in FIGs. 23 and 24 in the display device according to the present invention. That the user deletes the connection object may be understood as meaning that the user has no intention to control the connection object. Thus, if the display device receives a touch input for deleting a connection object, the display device detects that change in the visual properties is completed. Then, as shown in FIG. 25, the display device deletes the connection object, the control object, and the surrounding image of the control object, and displays the duplicate object as an original object 2510.

FIG. 26 is a view showing an embodiment in relation to use of a connection object in the display device according to the present invention. More particularly, FIG. 26 shows the case in which no object is displayed in an area that receives a touch input for designating a control area.

First, the display device receives a touch input for designating a control area from the user. In this case, the display device judges whether or not a displayed object is included in an area 2600 that receives the touch input for designating a control area.

As shown in FIG. 26(a), in the case in which no displayed object is included displayed in the control area 2600 set by the user, the display device displays a bar-shaped connection object 2610 as shown in FIG. 26(b).

The connection object 2610 is an object for connecting objects to each other. The display device 360 sets a particular object arbitrarily connected to an end of the connection object 2610 as a control object 2631, and displays the set control object 2631 in the control area 2630. The display device sets the particular object as a duplicate object 2621 that is a copy of the control object 2631, and displays a target area 2620 including the duplicate object 2621.

If the display device receives a touch input for adjusting the displacement of the connection object 2610, as described above with reference to FIGs. 19 and 20, the display device adjusts the displacement of the connection object 2610 in response to the touch input. Also, the display device sets the particular object displayed on at least one position of both ends of the connection object 2610 as a control object based on the adjusted displacement of the connection object 2610. The display device sets and displays a control area so as to include the set control object, and sets the particular object as a duplicate object to thereby display a target area including the duplicate object.

The subsequent operation is equal to the above description with reference to FIGs. 19 to 22. That is, if the display device receives a touch input for adjusting the displacement of the connection object 2610 from the user as shown in FIG. 26(b), the display device adjusts the connection object 2610 based on a touch input direction 2640a. Then, as shown in FIG. 26(c), the display device displays a particular object 2650 selected based on the adjusted displacement of the connection object as a control object in a control area 2630, and further displays a corresponding duplicate object in the target area 2621.

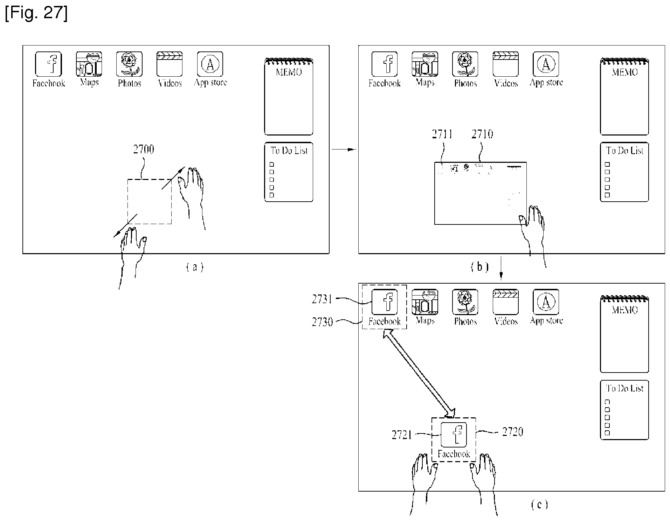

FIG. 27 is a view showing another embodiment in relation to a connection object in the display device according to the present invention. More particularly, FIG. 27 shows the case in which no object is displayed in an area that receives a touch input for designating a control area.

First, the display device receives a touch input for designating a control area from the user. In this case, the display device judges whether or not no displayed object is included in an area 2700 that receives a touch input for designating a control area from the user.

As shown in FIG. 27(a), if no displayed object is included in the control area 2700 set by the user, the display device displays a downscale area 2710 of the touchscreen as shown in FIG. 27(b). The downscale area 2710 is a miniature of a graphic image displayed on the touchscreen, and is displayed within the use radius of the user.

As such, by additionally displaying the downscale area 2710 of the touchscreen having a greater size than the use radius of the user, the display device assists the user in selecting even an object displayed in a region where the user does not reach.

If the user selects a particular object 2711 from the downscale area 2710, the display device sets the particular object 2711 as a control object. Then, as shown in FIG. 27(c), the display device displays a control area 2720 and a target area 2730 separated from each other.

The display device displays the selected particular object 2711 as a control object 2721 in the control area 2720, and sets the particular object 2711 as a duplicate object 2731 that is a copy of the control object to thereby display the target area 2730 including the duplicate object 2731.

In the meantime, in the above described first and second embodiments, 2-Dimentional (2D) objects displayed on the flat plane of the touchscreen 310 have been described by way of example. However, in the display device according to the present invention, a method for displaying an object may include a 3D display method, and is not limited to a particular method.

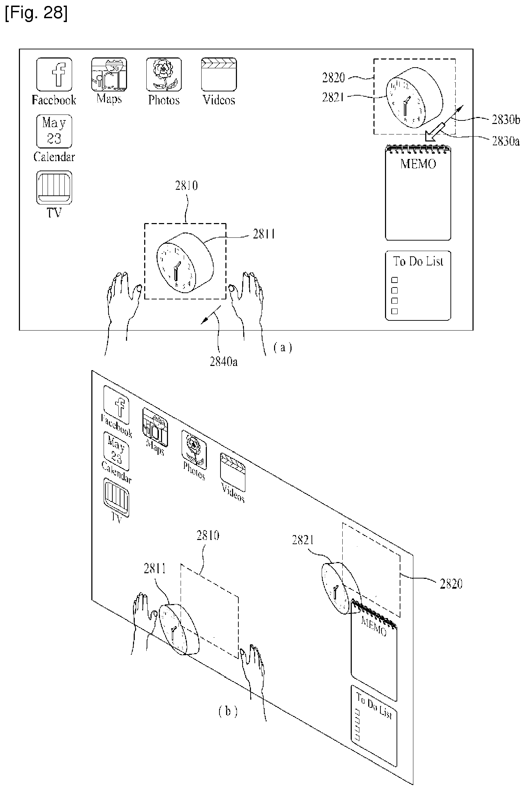

FIG. 28 is a view showing an embodiment in relation to control of an object displayed in a 3D space in the display device according to the present invention.

As described above, the user can control, for example, a position and visual properties of a control object 2811 using a control area 2810. That is, if the user changes the control object 2811, the display device synchronizes a duplicate object 2821 of a target area 2820 that is a copy of the control object 2811 with the control object 2811. The display device moves the duplicate object 2821 in response to a touch input with respect to a surrounding image of the control object 2811, and synchronizes the surrounding image of the control object 2811 with a surrounding image of the duplicate object 2821.

In this case, the visual properties of the control object 2811 that can be controlled by the user may include a three-dimensional effect with respect to the control object 2811. Thus, in the case in which objects are displayed in a 3D space, the user can adjust the three-dimensional effect using the control object 2811. It is assumed that the three-dimensional effect is adjusted on the basis of a Z-axis in a space having X-, Y-, and Z-axes.

As shown in FIG. 28(a), if the display device senses a touch input of a preset pattern or of a preset number of touch actions with respect to the control area 2810, the display device displays a '+'-direction arrow 2830a and '-'-direction arrow 2830b on the basis of a Z-axis in a target area 2820. Thereby, the user can locate the control object 2811 at a desired height by performing a touch input 2840a in a desired direction.

Thereby, as shown in FIG. 28(a), if the display device receives the '+'-direction touch input 2840a from the user, as shown in FIG. 28(b), the display device moves and displays the duplicate object 2821 in the corresponding direction 2830a.

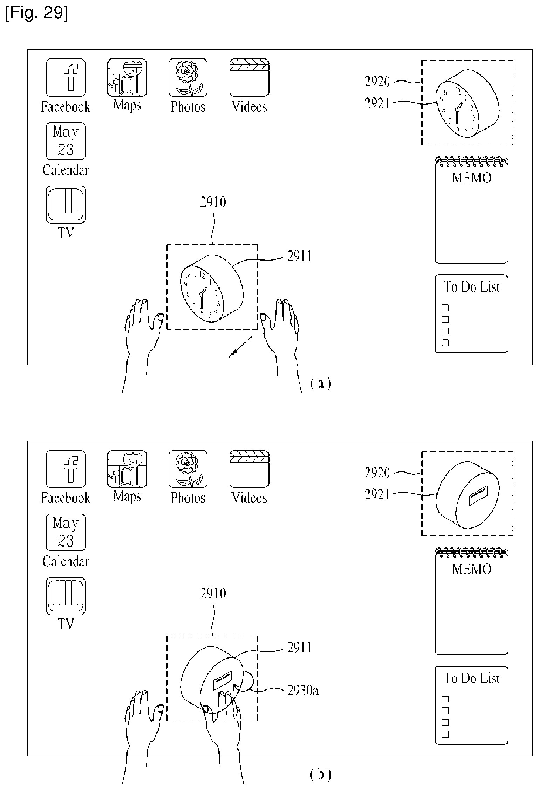

FIG. 29 is a view showing another embodiment in relation to control of an object displayed in a 3D form in the display device according to the present invention.

As shown in FIG. 29(a), in the case in which a control object 2911 is displayed in a 3D form, the display device may receive a touch input for changing visual properties of the control object 2911 from the user.

The display device, as shown in FIG. 29(b), may rotate and display the control object 2911 and a duplicate object 2921 in response to a touch input 2930a for rotating the control object 2911 displayed in a 3D form. More particularly, if the display device senses a touch input for rotating the control object 2911, the display device rotates the control object 2911, and displays the duplicate object 2921 synchronized with the control object 2911. In this case, rotation is performed about the center of the object as a rotation axis in a 3D space.

As described above with reference to FIGs. 28 and 29, the touchscreen according to the present invention may be a 3D display, and the display device may execute the same touch input in different ways based on the kind of the touchscreen.

As such, the display device may change at least one of the pattern of a touch input, the number of touch actions, and commands corresponding to the pattern of the touch input and the number of touch actions based on the kind of the touchscreen, and may store the changed result in the memory.

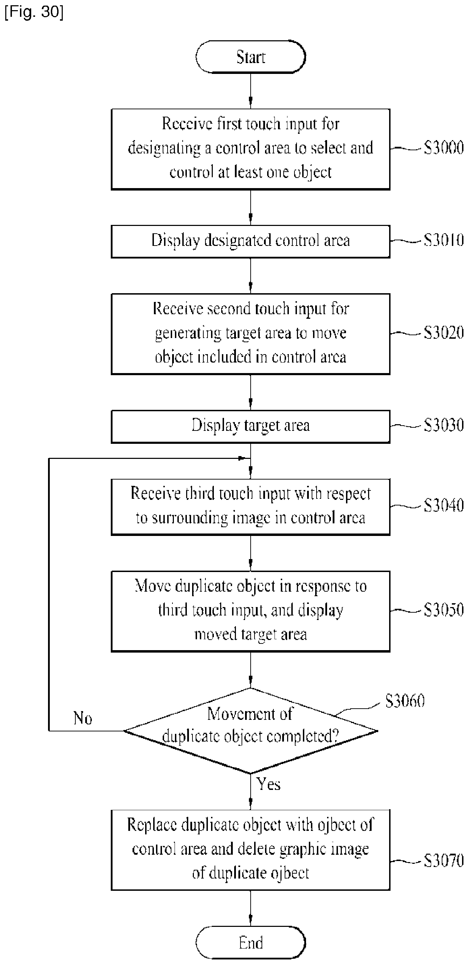

FIG. 30 is a flowchart of a method for controlling a display device according to an embodiment of the present invention. Hereinafter, a method for controlling the display device including the touchscreen that displays at least one object will be described with reference to FIG. 30. The touchscreen has a greater size than the use radius of the user.

First, the display device according to the present invention receives a first touch input for designating a control area required to select and control at least object displayed on the touchscreen (S3000). Then, the display device displays the designated control area (S3010). The control area may include at least one object.

The first touch input, as described above with reference to FIG. 5, may include a touch input of drawing a circle, a touch input of dragging an object in a specific direction, and a touch input of drawing an arbitrary area, and is not limited to a particular manner.

The display device, as described above with reference to FIG. 12, may display an area that receives the first touch input by imparting graphic effects thereto. The graphic effects serve to distinguish the area that receives the first touch input from other areas, and may include all graphic effects that can be visually recognized based on change in terms of color, transparency, chromaticity, and three-dimensional effects, for example.

However, if the area to which the graphic effects are imparted does not include a displayed object, the display device may receive a touch input for moving the area to which the graphic effects are imparted such that the area includes a displayed object.

As described above with reference to FIG. 13, the touch input for moving the area to which the graphic effects are imparted is a touch input with respect to the area to which the graphic effects are imparted, and the display device moves a target area that is a copy of the area to which the graphic effects are imparted in a an input direction of the touch input. As such, once the object has been included in the target area, the display device sets a control object and a duplicate object, and displays a graphic image of the target area in the area to which the graphic effects are imparted.

Then, if the display device receives a second touch input for generating a target area to move the object included in the control area (S3020), the display device displays the produced target area in response to the second touch input (S3030).

In this case, the display device imparts graphic effects to the target area so as to distinguish the target area from the graphic image of the control area, and displays the resulting target area. The graphic effects serve to distinguish the area that receives the first touch input from other areas, and may include all graphic effects that can be visually recognized based on change in terms of color, transparency, chromaticity, and three-dimensional effects, for example.

As described above with reference to FIG. 6, the target area includes the duplicate object that is a copy of the control object included in the control area, and a surrounding image of the control object included in the control area is synchronized with a surrounding image of the duplicate object included in the target area.

If the display device receives a third touch input with respect to the surrounding image in the control area from the user (S3040), the display device moves the duplicate object in response to the third touch input, and displays the moved target area (S3050).

As described above with reference to FIG. 7, the third touch input with respect to the surrounding image in the control area is a touch input for moving the duplicate object. Thus, the display device moves the duplicate object in an opposite direction of an input direction of the third touch input sensed by the touch sensing unit, and displays the moved target area. In this case, the display device synchronizes the surrounding image of the control object with the surrounding image of the duplicate object.

If the display device, as described above with reference to FIG. 11, receives a touch input for changing visual properties of the object included in the control area from the user, the display device may change visual properties of the duplicate object in response to the touch input. The visual properties may include at least one of the angle, size, position and color of the displayed object, and refer to visual factors that will be considered to display the object on the screen.

Thus, the user can directly confirm the result of the touch input with respect to the control object of the control area via the target area and the duplicate object. Thus, the display device according to the present invention has an advantage of allowing the user to easily control an object located farther than the use radius of the user.

The display device detects whether movement of the duplicate object is completed (S3060). The display device may detect that movement of the duplicate object is completed when a touch input is not input from the user for a preset time period or if a touch input of a preset pattern for deleting a control area is received.

If the display device detects that movement of the duplicate object is completed (S3060-YES), as described above with reference to FIG. 8, the display device deletes a graphic image of the object included in the control area, and displays the duplicate object as a control object (S3070). That is, the display device replaces the duplicate object with the control object and deletes a graphic imag of the duplicate object.

On the other hand, if the display device does not detect that movement of the duplicate object is completed (S3060-NO), the display device continuously receives the third touch input for movement of the duplicate object (S3040).

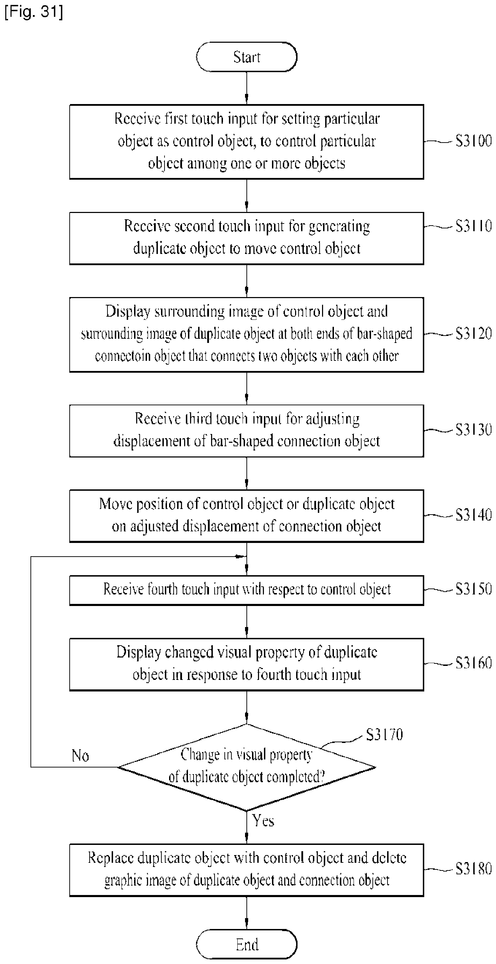

FIG. 31 is a flowchart of a method for controlling a display device according to another embodiment of the present invention. Differently from the embodiment as described with reference to FIG. 30, the embodiment shown in the flowchart of FIG. 31 is an embodiment using a connection object.

First, the display device, as described above with reference to FIG. 17, receives a first touch input for setting a particular object as a control object, in order to control the particular object among one or more objects displayed on the touchscreen (S3100). The first touch input may be a touch input using both hands, or a touch input using a single hand, and may be a touch input based on a particular pattern or a predetermined number of touch actions.

Then, if the display device receives a second touch input for generating a duplicate object to move a control object (S3110), the display device displays the produced duplicate object.

In this case, the display device may display a graphic image of the duplicate object by imparting graphic effects thereto, to distinguish the graphic image of the duplicate object from a graphic image of the control object. Also, the display device may display a surrounding image of the duplicate object by imparting graphic effects thereto, to distinguish the surrounding image of the duplicate object from a surrounding image of the control object.

The distinguishable graphic effects are created when changing display factors, such as transparency, chromaticity, size, etc., to achieve visual difference and may be created via a variety of means.

The second touch input may include a left hand touch input of continuously touching the control area and a right hand touch input of dragging the control object in a specific direction. Of course, the second touch input may be a touch input using only one hand other than both hands. Also, the second touch input is not limited to a touch input based on a preset pattern or a predetermined number of touch actions, and may be changed based on preset conditions.

The display device, as described above with reference to FIG. 18, displays a surrounding image of the control object and a surrounding image of the duplicate object at both ends of a bar-shaped connection object that connects both the objects to each other (S3120).

The display device, as described above with reference to FIG. 13, may display the bar-shaped connection object if no displayed object is included in an area that receives the first touch input for setting the particular object as the control object.

In this case, the display device receives a touch input for adjusting the displacement of the connection object from the user, thereby adjusting the displacement of the connection object. The display device may set a particular object displayed on at least one of both ends of the bar-shaped connection object as the control object based on the adjusted displacement. As such, the display device may allow the control object to be included in the control area.

If the display device, as described above with reference to FIGs. 19 and 20, receives a third touch input for adjusting the displacement of the bar-shaped connection object (S3130), the display device moves the position of the control object or the duplicate object based on the adjusted displacement of the connection object (S3140). The displacement of the connection object may include at least one of the length and angle of the connection object.

The display device may move the position of the control object of the duplicate object using a different method rather than using the connection object. For example, the display device may move the position of the duplicate object in response to a touch input if the display device receives the touch input with respect to the surrounding image of the control object.

In this case, the display device moves the position of the duplicate object in an opposite direction of an input direction of the touch input with respect to the surrounding image of the control object, and synchronizes the surrounding image of the control object with the surrounding image of the duplicate object.

If the display device, as described above with reference to FIG. 22, receives a fourth touch input with respect to the control object from the user, the display device changes and displays visual properties of the duplicate object in response to the fourth touch input (S3160). The visual properties may include at least one of the angle, size, position and color of the displayed object, and refer to factors that will be considered to display the object on the screen.

The display device, as described above with reference to FIGs. 23 and 24, detects whether change of the duplicate object is completed (S3170). The display device may detect that movement of the duplicate object is completed if a touch input is not received from the user for a preset time period, or if a touch input of a preset pattern for deleting the control area is received.

If the display device detects that movement of the duplicate object is completed (S3170-YES), as described above with reference to FIG. 25, the display device deletes a graphic image of the object included in the control area and a graphic image of the connection object, and displays the duplicate object as a control object (S3180). That is, the duplicate object is displayed as an original object. In other words, the display device replaces the duplicate object with the control object and deletes a graphic image of the duplicate object and connection object. On the other hand, if the display device does not detect that movement of the duplicate object is completed (S3170-NO), the display device continuously receives the fourth touch input with respect to the duplicate object (S3150).

It will be understood that applications of the display device and the control method thereof according to the present invention are not limited to configurations and methods of the above described embodiment, and some or all of the respective embodiments may be selectively combined to realize various modifications.

In the meantime, the method for controlling the display device according to the present invention may be realized as a processor readable code of a processor readable recording medium included in a network device. The processor readable recording medium may include all kinds of storage devices for storing data that can be read by a processor. Examples of the processor readable recoding medium include a ROM, a RAM, a CD-ROM, a magnetic tape, a floppy disc, and an optical data storage device, for example, and may be realized in the form of a carrier wave (for example, transmission via the Internet). Also, the processor readable recording medium may be distributed in a computer system connected thereto via a network, thereby serving to store and execute a processor readable code in a distributed processing manner.

Although the exemplary embodiments of the present invention have been illustrated and described as above, of course, it will be apparent to those skilled in the art that the present invention is not limited to the above described particular embodiments, and various modifications and variations can be made without departing from the scope of the invention.

Both the invention of a device and the invention of a method have been described in this specification, and thus descriptions of both the inventions may be complementally applied as necessary.

### MODE OF THE INVENTION

As described above, a related description has sufficiently been discussed in the above "Best Mode" for implementation of the present invention.

### INDUSTRIAL APPLICABILITY

As described above, the present invention may be wholly or partially applied to a display device including a touchscreen and a method for controlling the same.

## Claims

1. A method of controlling a display device (300, 360, 400) including a touchscreen (310) displaying at least one object and providing a user interface according to the touchscreen (310) size and the length of the user's arm, method comprising:
receiving a first touch input for designating a control area (410, 530, 610, 710, 910, 1010, 1310, 1410, 1620, 1710, 1810, 1920, 2020, 2120, 2330, 2600, 2630, 2700, 2720, 2810) to select and control the at least one object;
displaying the designated control area (410, 530, 610, 710, 910, 1010, 1310, 1410, 1620, 1710, 1810, 1920, 2020, 2120, 2330, 2600, 2630, 2700, 2720, 2810), wherein the control area (410, 530, 610, 710, 910, 1010, 1310, 1410, 1620, 1710, 1810, 1920, 2020, 2120, 2330, 2600, 2630, 2700, 2720, 2810) includes at least one object;
receiving a second touch input for generating a target area to move the at least one object included in the control area (410, 530, 610, 710, 910, 1010, 1310, 1410, 1620, 1710, 1810, 1920, 2020, 2120, 2330, 2600, 2630, 2700, 2720, 2810);
displaying the target area, wherein the target area includes a duplicate object of the object included in the control area (410, 530, 610, 710, 910, 1010, 1310, 1410, 1620, 1710, 1810, 1920, 2020, 2120, 2330, 2600, 2630, 2700, 2720, 2810), and wherein a surrounding image of the object included in the control area (410, 530, 610, 710, 910, 1010, 1310, 1410, 1620, 1710, 1810, 1920, 2020, 2120, 2330, 2600, 2630, 2700, 2720, 2810) is synchronized with a surrounding image of the object included in the target area;
receiving a third touch input with respect to the surrounding image of the control area (410, 530, 610, 710, 910, 1010, 1310, 1410, 1620, 1710, 1810, 1920, 2020, 2120, 2330, 2600, 2630, 2700, 2720, 2810);
moving the duplicate object in response to the third touch input, and displaying the moved target area;
detecting whether movement of the duplicate object is completed; and
replacing the duplicate object with the object of the control area (410, 530, 610, 710, 910, 1010, 1310, 1410, 1620, 1710, 1810, 1920, 2020, 2120, 2330, 2600, 2630, 2700, 2720, 2810) and deleting a graphic image of the duplicate object, when movement of the duplicate object is completed.

2. The method of claim 1, wherein the touchscreen (310) includes a wider screen than the use radius of a user, and the use radius of the user is a range within which the user can touch the touchscreen (310) using touch means.

3. The method of claim 1, further comprising:
wherein if the display device (300, 360, 400) receives a touch input for designating a control area (410, 530, 610, 710, 910, 1010, 1310, 1410, 1620, 1710, 1810, 1920, 2020, 2120, 2330, 2600, 2630, 2700, 2720, 2810),
displaying, by the display device (300, 360, 400), an area that receives the first touch input by imparting graphic effects to the area; and
receiving in the display device (300, 360, 400) a fourth touch input for moving the area to which the graphic effects are imparted if the area to which the graphic effects are imparted includes no displayed object,
wherein the graphic effects are effects obtained when user recognizable factors are displayed in different ways.

4. The method of claim 1, wherein the displaying the target area includes imparting graphic effects distinguishable from the graphic image of the control area (410, 530, 610, 710, 910, 1010, 1310, 1410, 1620, 1710, 1810, 1920, 2020, 2120, 2330, 2600, 2630, 2700, 2720, 2810) to the target area, wherein the graphic effects are effects obtained when user recognizable factors are displayed in different ways.

5. The method of claim 1, wherein the moving the duplicate object and displaying the moved target area includes moving a position of the duplicate object in an opposite direction of a direction of the third touch input with respect to the surrounding image of the control area (410, 530, 610, 710, 910, 1010, 1310, 1410, 1620, 1710, 1810, 1920, 2020, 2120, 2330, 2600, 2630, 2700, 2720, 2810) and displaying the moved target area.

6. The method of claim 1, further comprising:
receiving a fifth touch input for changing visual properties of the object included in the control area (410, 530, 610, 710, 910, 1010, 1310, 1410, 1620, 1710, 1810, 1920, 2020, 2120, 2330, 2600, 2630, 2700, 2720, 2810); and
displaying changed visual properties of the duplicate object in response to a fifth touch input.

7. The method of claim 6, wherein the visual properties of the duplicate object include at least one of the angle, size, position and color of the displayed duplicate object.

8. The method of claim 1, wherein the detecting whether movement of the duplicate object is completed includes detecting if a touch input is not received for a preset time period.

9. The method of claim 1, wherein the detecting whether movement of the duplicate object is completed includes detecting that movement of the duplicate object is completed when receiving a sixth touch input of a preset pattern for deleting the control area (410, 530, 610, 710, 910, 1010, 1310, 1410, 1620, 1710, 1810, 1920, 2020, 2120, 2330, 2600, 2630, 2700, 2720, 2810).

10. A display device (300, 360, 400) including a touchscreen (310) that displays at least one object and providing a user interface to manage a region of the touchscreen (310) where a user's hand does not reach according to the touchscreen (310) size and the length of the user's arm, the display device (300, 360, 400) comprising:
a display unit (131) configured to display the at least one object;
a touch sensing unit (311) configured to sense a user touch input; and
a controller (350) configured to control display of the object in response to the touch input,
wherein the display device (300, 360, 400) is further configured to:
designate a control area (410, 530, 610, 710, 910, 1010, 1310, 1410, 1620, 1710, 1810, 1920, 2020, 2120, 2330, 2600, 2630, 2700, 2720, 2810) to select and control the at least one object in response to a sensed first touch input, when the control area (410, 530, 610, 710, 910, 1010, 1310, 1410, 1620, 1710, 1810, 1920, 2020, 2120, 2330, 2600, 2630, 2700, 2720, 2810) includes at least one object;
generate a target area to move the object included in the control area (410, 530, 610, 710, 910, 1010, 1310, 1410, 1620, 1710, 1810, 1920, 2020, 2120, 2330, 2600, 2630, 2700, 2720, 2810) in response to a sensed second touch input,
wherein the target area includes a duplicate object of the object included in the control area (410, 530, 610, 710, 910, 1010, 1310, 1410, 1620, 1710, 1810, 1920, 2020, 2120, 2330, 2600, 2630, 2700, 2720, 2810);
move the duplicate object in response to a sensed third touch input with respect to a surrounding image of the control area, and displaying the moved target area; and
replace the duplicate object with the object of the control area (410, 530, 610, 710, 910, 1010, 1310, 1410, 1620, 1710, 1810, 1920, 2020, 2120, 2330, 2600, 2630, 2700, 2720, 2810) and deleting a graphic image of the duplicate object, when movement of the duplicate object is completed.

11. The display device (300, 360, 400) of claim 10, wherein the touchscreen (310) includes a wider screen than the use radius of a user, and the use radius of the user is a range within which the user can touch the touchscreen (310) using touch means.

12. The display device (300, 360, 400) of claim 10, wherein the display device (300, 360, 400) is further configured, when the display device (300, 360, 400) receives a touch input for designating a control area (410, 530, 610, 710, 910, 1010, 1310, 1410, 1620, 1710, 1810, 1920, 2020, 2120, 2330, 2600, 2630, 2700, 2720, 2810), to:
display an area that receives the first touch input by imparting graphic effects to the area; and
receive, in the display device (300, 360, 400), a fourth touch input for moving the area, to which the graphic effects are imparted, if the area to which the graphic effects are imparted includes no displayed object,
wherein the graphic effects are effects obtained when user recognizable factors are displayed in different ways.

13. The display device (300, 360, 400) of claim 10, wherein the display device (300, 360, 400) is further configured to impart graphic effects distinguishable from the graphic image of the control area (410, 530, 610, 710, 910, 1010, 1310, 1410, 1620, 1710, 1810, 1920, 2020, 2120, 2330, 2600, 2630, 2700, 2720, 2810) to the target area, wherein the graphic effects are effects obtained when user regognisable factors are displayed in different ways.

14. The display device (300, 360, 400) of claim 10, wherein the moving the duplicate object and displaying the moved target area include moving a position of the duplicate object in an opposite direction of a direction of the third touch input with respect to the surrounding image of the control area (410, 530, 610, 710, 910, 1010, 1310, 1410, 1620, 1710, 1810, 1920, 2020, 2120, 2330, 2600, 2630, 2700, 2720, 2810) and displaying the moved target area.

15. The display device (300, 360, 400) of claim 10, wherein the display device (300, 360, 400) is further configured to:
receive a fifth touch input for changing visual properties of the object included in the control area (410, 530, 610, 710, 910, 1010, 1310, 1410, 1620, 1710, 1810, 1920, 2020, 2120, 2330, 2600, 2630, 2700, 2720, 2810); and
display changed visual properties of the duplicate object in response to a fifth touch input.

## Patentansprüche

1. Verfahren zur Steuerung einer Anzeigevorrichtung (300, 360, 400) mit einem Berührungsbildschirm (310), der wenigstens ein Objekt anzeigt und eine Benutzerschnittstelle entsprechend der Größe des Berührungsbildschirms (310) und der Armlänge des Benutzers bereitstellt, wobei das Verfahren umfasst:
Empfangen einer ersten Berührungseingabe zum Bestimmen eines Steuerbereichs (410, 530, 610, 710, 910, 1010, 1310, 1410, 1620, 1710, 1810, 1920, 2020, 2120, 2330, 2600, 2630, 2700, 2720, 2810) zum Auswählen und Steuern des wenigstens einen Objekts,
Anzeigen des bestimmten Steuerbereichs (410, 530, 610, 710, 910, 1010, 1310, 1410, 1620, 1710, 1810, 1920, 2020, 2120, 2330, 2600, 2630, 2700, 2720, 2810), wobei der Steuerbereich (410, 530, 610, 710, 910, 1010, 1310, 1410, 1620, 1710, 1810, 1920, 2020, 2120, 2330, 2600, 2630, 2700, 2720, 2810) zumindest ein Objekt enthält,
Empfangen einer zweiten Berührungseingabe zum Erzeugen eines Zielbereichs, um das zumindest eine in dem Steuerbereich (410, 530, 610, 710, 910, 1010, 1310, 1410, 1620, 1710, 1810, 1920, 2020, 2120, 2330, 2600, 2630, 2700, 2720, 2810) enthaltene Objekt zu bewegen,
Anzeigen des Zielbereichs, wobei der Zielbereich ein Duplikatobjekt des in dem Steuerbereich (410, 530, 610, 710, 910, 1010, 1310, 1410, 1620, 1710, 1810, 1920, 2020, 2120, 2330, 2600, 2630, 2700, 2720, 2810) enthaltenen Objekts enthält und wobei ein das in dem Steuerbereich (410, 530, 610, 710, 910, 1010, 1310, 1410, 1620, 1710, 1810, 1920, 2020, 2120, 2330, 2600, 2630, 2700, 2720, 2810) enthaltene Objekt umgebendes Bild mit einem Bild synchronisiert wird, welches das in dem Zielbereich enthaltene Objekt umgibt,
Empfangen einer dritten Berührungseingabe betreffend das umgebende Bild des Steuerbereichs (410, 530, 610, 710, 910, 1010, 1310, 1410, 1620, 1710, 1810, 1920, 2020, 2120, 2330, 2600, 2630, 2700, 2720, 2810),
Bewegen des Duplikatobjekts in Reaktion auf die dritte Berührungseingabe und Anzeigen des bewegten Zielbereichs,
Erfassen, ob eine Bewegung des Duplikatobjekts abgeschlossen ist, und
Ersetzen des Duplikatobjekts durch das Objekt des Steuerbereichs (410, 530, 610, 710, 910, 1010, 1310, 1410, 1620, 1710, 1810, 1920, 2020, 2120, 2330, 2600, 2630, 2700, 2720, 2810) und Löschen eines Abbildes des Duplikatobjekts, wenn eine Bewegung des Duplikatobjekts abgeschlossen ist.

2. Verfahren nach Anspruch 1, bei dem der Berührungsbildschirm (310) einen breiteren Bildschirm aufweist als der Benutzungsradius eines Benutzers und der Benutzungsradius des Benutzers ein Bereich ist, innerhalb dessen der Benutzer den Berührungsbildschirm (310) unter Verwendung von Berührungsmitteln berühren kann.

3. Verfahren nach Anspruch 1, ferner umfassend:
falls die Anzeigevorrichtung (300, 360, 400) eine Berührungseingabe zum Bestimmen eines Steuerbereichs (410, 530, 610, 710, 910, 1010, 1310, 1410, 1620, 1710, 1810, 1920, 2020, 2120, 2330, 2600, 2630, 2700, 2720, 2810) empfängt,
Anzeigen, mittels der Anzeigevorrichtung (300, 360, 400), eines die erste Berührungseingabe empfangenden Bereichs durch Versehen des Bereichs mit grafischen Effekten, und
Empfangen, in der Anzeigevorrichtung (300, 360, 400), einer vierten Berührungseingabe zum Bewegen des Bereichs, der mit den grafischen Effekten versehen ist, falls der Bereich, der mit den grafischen Effekten versehen ist, kein angezeigtes Objekt enthält,
wobei die grafischen Effekte Effekte sind, die erhalten werden, wenn durch Benutzer erkennbare Faktoren auf unterschiedliche Arten angezeigt werden.

4. Verfahren nach Anspruch 1, bei dem das Anzeigen des Zielbereichs beinhaltet, dass der Zielbereich mit grafischen Effekten versehen wird, die von dem Abbild des Steuerbereichs (410, 530, 610, 710, 910, 1010, 1310, 1410, 1620, 1710, 1810, 1920, 2020, 2120, 2330, 2600, 2630, 2700, 2720, 2810) unterscheidbar sind, wobei die grafischen Effekte Effekte sind, die erhalten werden, wenn durch Benutzer erkennbare Faktoren auf unterschiedliche Arten angezeigt werden.

5. Verfahren nach Anspruch 1, bei dem das Bewegen des Duplikatobjekts und Anzeigen des bewegten Zielbereichs ein Bewegen einer Position des Duplikatobjekts in eine Richtung entgegengesetzt zu einer Richtung der dritten Berührungseingabe betreffend das umgebende Bild des Steuerbereichs (410, 530, 610, 710, 910, 1010, 1310, 1410, 1620, 1710, 1810, 1920, 2020, 2120, 2330, 2600, 2630, 2700, 2720, 2810) und ein Anzeigen des bewegten Zielbereichs umfasst.

6. Verfahren nach Anspruch 1, ferner umfassend:
Empfangen einer fünften Berührungseingabe zum Ändern visueller Eigenschaften des in dem Steuerbereich (410, 530, 610, 710, 910, 1010, 1310, 1410, 1620, 1710, 1810, 1920, 2020, 2120, 2330, 2600, 2630, 2700, 2720, 2810) enthaltenen Objekts, und
Anzeigen geänderter visueller Eigenschaften des Duplikatobjekts in Reaktion auf eine fünfte Berührungseingabe.

7. Verfahren nach Anspruch 6, bei dem die visuellen Eigenschaften des Duplikatobjekts den Winkel und/oder die Größe und/oder die Position und/oder die Farbe des angezeigten Duplikatobjekts umfassen.

8. Verfahren nach Anspruch 1, bei dem das Erfassen, ob eine Bewegung des Duplikatobjekts abgeschlossen ist, ein Erfassen beinhaltet, ob eine Berührungseingabe für eine vorbestimmte Zeitdauer nicht empfangen wird.

9. Verfahren nach Anspruch 1, bei dem das Erfassen, ob eine Bewegung des Duplikatobjekts abgeschlossen ist, ein Erfassen beinhaltet, dass eine Bewegung des Duplikatobjekts abgeschlossen ist, wenn eine sechste Berührungseingabe eines vorbestimmten Musters zum Löschen des Steuerbereichs (410, 530, 610, 710, 910, 1010, 1310, 1410, 1620, 1710, 1810, 1920, 2020, 2120, 2330, 2600, 2630, 2700, 2720, 2810) empfangen wird.

10. Anzeigevorrichtung (300, 360, 400) mit einem Berührungsbildschirm (310), der wenigstens einen Gegenstand anzeigt und eine Benutzerschnittstelle zum Verwalten eines Bereichs des Berührungsbildschirms (310) bereitstellt, in den eine Hand eines Benutzers entsprechend der Größe des Berührungsbildschirms (310) und der Armlänge des Benutzers nicht reicht, wobei die Anzeigevorrichtung (300, 360, 400) aufweist:
eine Anzeigeeinheit (131), die dazu konfiguriert ist, das wenigstens eine Objekt anzuzeigen,
eine Berührungserfassungseinheit (311), die dazu konfiguriert ist, eine Benutzerberührungseingabe zu erfassen, und
eine Steuereinheit (350), die dazu konfiguriert ist, ein Anzeigen des Objekts in Reaktion auf die Berührungseingabe zu steuern,
wobei die Anzeigevorrichtung (300, 360, 400) ferner dazu konfiguriert ist:
einen Steuerbereich (410, 530, 610, 710, 910, 1010, 1310, 1410, 1620, 1710, 1810, 1920, 2020, 2120, 2330, 2600, 2630, 2700, 2720, 2810) zu bestimmen zum Auswählen und Steuern des wenigstens einen Objekts in Reaktion auf eine erfasste erste Berührungseingabe, wenn der Steuerbereich (410, 530, 610, 710, 910, 1010, 1310, 1410, 1620, 1710, 1810, 1920, 2020, 2120, 2330, 2600, 2630, 2700, 2720, 2810) das wenigstens eine Objekt enthält,
einen Zielbereich zu erzeugen zum Bewegen des in dem Steuerbereich (410, 530, 610, 710, 910, 1010, 1310, 1410, 1620, 1710, 1810, 1920, 2020, 2120, 2330, 2600, 2630, 2700, 2720, 2810) enthaltenen Objekts in Reaktion auf eine erfasste zweite Berührungseingabe,
wobei der Zielbereich ein Duplikatobjekt des in dem Steuerbereich (410, 530, 610, 710, 910, 1010, 1310, 1410, 1620, 1710, 1810, 1920, 2020, 2120, 2330, 2600, 2630, 2700, 2720, 2810) enthaltenen Objekts enthält,
das Duplikatobjekt zu bewegen in Reaktion auf eine erfasste dritte Berührungseingabe betreffend ein umgebendes Bild des Steuerbereichs und den bewegten Zielbereich anzuzeigen, und
das Duplikatobjekt durch das Objekt des Steuerbereichs (410, 530, 610, 710, 910, 1010, 1310, 1410, 1620, 1710, 1810, 1920, 2020, 2120, 2330, 2600, 2630, 2700, 2720, 2810) zu ersetzen und ein Abbild des Duplikatobjekts zu löschen, wenn eine Bewegung des Duplikatobjekts abgeschlossen ist.

11. Anzeigevorrichtung (300, 360, 400) nach Anspruch 10, bei der der Berührungsbildschirm (310) einen breiteren Bildschirm aufweist als der Benutzerradius eines Benutzers, wobei der Benutzerradius des Benutzers ein Bereich ist, innerhalb dessen der Benutzer den Berührungsbildschirm (310) unter Verwendung von Berührungsmitteln berühren kann.

12. Anzeigevorrichtung (300, 360, 400) nach Anspruch 10, bei der die Anzeigevorrichtung (300, 360, 400) ferner dazu konfiguriert ist, wenn die Anzeigevorrichtung (300, 360, 400) eine Berührungseingabe zum Bestimmen eines Steuerbereichs (410, 530, 610, 710, 910, 1010, 1310, 1410, 1620, 1710, 1810, 1920, 2020, 2120, 2330, 2600, 2630, 2700, 2720, 2810) empfängt:
einen die erste Berührungseingabe empfangenden Bereich anzuzeigen durch Versehen des Bereichs mit grafischen Effekten, und
in der Anzeigevorrichtung (300, 360, 400) eine vierte Berührungseingabe zu empfangen zum Bewegen des Bereichs, der mit den grafischen Effekten versehen ist, falls der Bereich, der mit den grafischen Effekten versehen ist, kein angezeigtes Objekt enthält,
wobei die grafischen Effekte Effekte sind, die erhalten werden, wenn durch Benutzer erkennbare Faktoren auf unterschiedliche Arten angezeigt werden.

13. Anzeigevorrichtung (300, 360, 400) nach Anspruch 10, bei der die Anzeigevorrichtung (300, 360, 400) ferner dazu konfiguriert ist, den Zielbereich mit grafischen Effekten zu versehen, die von dem Abbild des Steuerbereichs (410, 530, 610, 710, 910, 1010, 1310, 1410, 1620, 1710, 1810, 1920, 2020, 2120, 2330, 2600, 2630, 2700, 2720, 2810) unterscheidbar sind, wobei die grafischen Effekte Effekte sind, die erhalten werden, wenn durch Benutzer erkennbare Faktoren auf unterschiedliche Arten angezeigt werden.

14. Anzeigevorrichtung (300, 360, 400) nach Anspruch 10, bei der das Bewegen des Duplikatobjekts und Anzeigen des bewegten Zielbereichs ein Bewegen einer Position des Duplikatobjekts in eine Richtung entgegengesetzt einer Richtung der dritten Berührungseingabe betreffend das umgebende Bild des Steuerbereichs (410, 530, 610, 710, 910, 1010, 1310, 1410, 1620, 1710, 1810, 1920, 2020, 2120, 2330, 2600, 2630, 2700, 2720, 2810) und ein Anzeigen des bewegten Zielbereichs umfasst.

15. Anzeigevorrichtung (300, 360, 400) nach Anspruch 10, bei der die Anzeigevorrichtung (300, 360, 400) ferner dazu konfiguriert ist:
eine fünfte Berührungseingabe zum Ändern visueller Eigenschaften des in dem Steuerbereich (410, 530, 610, 710, 910, 1010, 1310, 1410, 1620, 1710, 1810, 1920, 2020, 2120, 2330, 2600, 2630, 2700, 2720, 2810) enthaltenen Objekts zu empfangen, und
geänderte visuelle Eigenschaften des Duplikatobjekts in Reaktion auf eine fünfte Berührungseingabe anzuzeigen.

## Revendications

1. Procédé de commande d'un dispositif d'affichage (300, 360, 400) incluant un écran tactile (310) affichant au moins un objet et fournissant une interface utilisateur en fonction de la taille de l'écran tactile (310) et de la longueur du bras de l'utilisateur, le procédé comprenant :
la réception d'une première entrée tactile pour désigner une zone de commande (410, 530, 610, 710, 910, 1010, 1310, 1410, 1620, 1710, 1810, 1920, 2020, 2120, 2330, 2600, 2630, 2700, 2720, 2810) pour sélectionner et commander l'au moins un objet ;
l'affichage de la zone de commande (410, 530, 610, 710, 910, 1010, 1310, 1410, 1620, 1710, 1810, 1920, 2020, 2120, 2330, 2600, 2630, 2700, 2720, 2810) désignée, dans lequel la zone de commande (410, 530, 610, 710, 910, 1010, 1310, 1410, 1620, 1710, 1810, 1920, 2020, 2120, 2330, 2600, 2630, 2700, 2720, 2810) inclut au moins un objet ;
la réception d'une deuxième entrée tactile pour générer une zone cible pour déplacer l'au moins un objet inclus dans la zone de commande (410, 530, 610, 710, 910, 1010, 1310, 1410, 1620, 1710, 1810, 1920, 2020, 2120, 2330, 2600, 2630, 2700, 2720, 2810) ;
l'affichage de la zone cible, dans lequel la zone cible inclut un objet en duplicata de l'objet inclus dans la zone de commande (410, 530, 610, 710, 910, 1010, 1310, 1410, 1620, 1710, 1810, 1920, 2020, 2120, 2330, 2600, 2630, 2700, 2720, 2810), et dans lequel une image adjacente de l'objet inclus dans la zone de commande (410, 530, 610, 710, 910, 1010, 1310, 1410, 1620, 1710, 1810, 1920, 2020, 2120, 2330, 2600, 2630, 2700, 2720, 2810) est synchronisée avec une image adjacente de l'objet inclus dans la zone cible ;
la réception d'une troisième entrée tactile pour ce qui concerne l'image adjacente de la zone de commande (410, 530, 610, 710, 910, 1010, 1310, 1410, 1620, 1710, 1810, 1920, 2020, 2120, 2330, 2600, 2630, 2700, 2720, 2810) ;
le déplacement de l'objet en duplicata en réponse à la troisième entrée tactile, et l'affichage de la zone cible déplacée ;
la détection si un mouvement de l'objet en duplicata est terminé ; et
le remplacement de l'objet en duplicata par l'objet de la zone de commande (410, 530, 610, 710, 910, 1010, 1310, 1410, 1620, 1710, 1810, 1920, 2020, 2120, 2330, 2600, 2630, 2700, 2720, 2810) et la suppression d'une image graphique de l'objet en duplicata, lorsque le mouvement de l'objet en duplicata est terminé.

2. Procédé selon la revendication 1, dans lequel l'écran tactile (310) inclut un écran plus large que le rayon d'utilisation d'un utilisateur, et le rayon d'utilisation de l'utilisateur est une plage à l'intérieur de laquelle l'utilisateur peut toucher l'écran tactile (310) en utilisant un moyen pour toucher.

3. Procédé selon la revendication 1, comprenant en outre :
dans lequel si le dispositif d'affichage (300, 360, 400) reçoit une entrée tactile pour désigner une zone de commande (410, 530, 610, 710, 910, 1010, 1310, 1410, 1620, 1710, 1810, 1920, 2020, 2120, 2330, 2600, 2630, 2700, 2720, 2810),
l'affichage, par le dispositif d'affichage (300, 360, 400), d'une zone qui reçoit la première entrée tactile en impartissant des effets graphiques à la zone ; et
la réception dans le dispositif d'affichage (300, 360, 400) d'une quatrième entrée tactile pour déplacer la zone à laquelle les effets graphiques sont impartis si la zone à laquelle les effets graphiques sont impartis n'inclut pas d'objet affiché,
dans lequel les effets graphiques sont des effets obtenus lorsque des facteurs reconnaissables par l'utilisateur sont affichés de différentes manières.

4. Procédé selon la revendication 1, dans lequel l'affichage de la zone cible inclut d'impartir des effets graphiques distinguables de l'image graphique de la zone de commande (410, 530, 610, 710, 910, 1010, 1310, 1410, 1620, 1710, 1810, 1920, 2020, 2120, 2330, 2600, 2630, 2700, 2720, 2810) à la zone cible, dans lequel les effets graphiques sont des effets obtenus lorsque des facteurs reconnaissables par l'utilisateur sont affichés de différentes manières.

5. Procédé selon la revendication 1, dans lequel le déplacement de l'objet en duplicata et l'affichage de la zone cible déplacée incluent le déplacement d'une position de l'objet en duplicata dans une direction opposée à une direction de la troisième entrée tactile par rapport à l'image adjacente de la zone de commande (410, 530, 610, 710, 910, 1010, 1310, 1410, 1620, 1710, 1810, 1920, 2020, 2120, 2330, 2600, 2630, 2700, 2720, 2810) et l'affichage de la zone cible déplacée.

6. Procédé selon la revendication 1, comprenant en outre :
la réception d'une cinquième entrée tactile pour changer des propriétés visuelles de l'objet inclus dans la zone de commande (410, 530, 610, 710, 910, 1010, 1310, 1410, 1620, 1710, 1810, 1920, 2020, 2120, 2330, 2600, 2630, 2700, 2720, 2810) ; et
l'affichage de propriétés visuelles changées de l'objet en duplicata en réponse à une cinquième entrée tactile.

7. Procédé selon la revendication 6, dans lequel les propriétés visuelles de l'objet en duplicata incluent au moins un(e) de l'angle, de la taille, de la position et de la couleur de l'objet en duplicata affiché.

8. Procédé selon la revendication 1, dans lequel la détection si le mouvement de l'objet en duplicata est terminé inclut la détection si une entrée tactile n'est pas reçue sur une période de temps prédéfinie.

9. Procédé selon la revendication 1, dans lequel la détection si le mouvement de l'objet en duplicata est terminé inclut la détection que le mouvement de l'objet en duplicata est terminé à la réception d'une sixième entrée tactile d'un motif prédéfini pour effacer la zone de commande (410, 530, 610, 710, 910, 1010, 1310, 1410, 1620, 1710, 1810, 1920, 2020, 2120, 2330, 2600, 2630, 2700, 2720, 2810).

10. Dispositif d'affichage (300, 360, 400) incluant un écran tactile (310) qui affiche au moins un objet et fournissant une interface utilisateur pour gérer une région de l'écran tactile (310) qu'une main d'un utilisateur n'atteint pas en fonction de la taille de l'écran tactile (310) et de la longueur du bras de l'utilisateur, le dispositif d'affichage (300, 360, 400) comprenant :
une unité (131) d'affichage configurée pour afficher l'au moins un objet ;
une unité (311) de détection tactile configurée pour détecter une entrée tactile d'utilisateur ; et
un contrôleur (350) configuré pour commander l'affichage de l'objet en réponse à l'entrée tactile,
dans lequel le dispositif d'affichage (300, 360, 400) est en outre configuré pour :
désigner une zone de commande (410, 530, 610, 710, 910, 1010, 1310, 1410, 1620, 1710, 1810, 1920, 2020, 2120, 2330, 2600, 2630, 2700, 2720, 2810) pour sélectionner et commander l'au moins un objet en réponse à une première entrée tactile détectée, lorsque la zone de commande (410, 530, 610, 710, 910, 1010, 1310, 1410, 1620, 1710, 1810, 1920, 2020, 2120, 2330, 2600, 2630, 2700, 2720, 2810) inclut au moins un objet ;
générer une zone cible pour déplacer l'objet inclus dans la zone de commande (410, 530, 610, 710, 910, 1010, 1310, 1410, 1620, 1710, 1810, 1920, 2020, 2120, 2330, 2600, 2630, 2700, 2720, 2810) en réponse à une deuxième entrée tactile détectée,
dans lequel la zone cible inclut un objet en duplicata de l'objet inclus dans la zone de commande (410, 530, 610, 710, 910, 1010, 1310, 1410, 1620, 1710, 1810, 1920, 2020, 2120, 2330, 2600, 2630, 2700, 2720, 2810) ;
déplacer l'objet en duplicata en réponse à une troisième entrée tactile détectée pour ce qui concerne une image adjacente de la zone de commande, et afficher la zone cible déplacée ; et
remplacer l'objet en duplicata par l'objet de la zone de commande (410, 530, 610, 710, 910, 1010, 1310, 1410, 1620, 1710, 1810, 1920, 2020, 2120, 2330, 2600, 2630, 2700, 2720, 2810) et supprimer une image graphique de l'objet en duplicata, lorsqu'un mouvement de l'objet en duplicata est terminé.

11. Dispositif d'affichage (300, 360, 400) selon la revendication 10, dans lequel l'écran tactile (310) inclut un écran plus large que le rayon d'utilisation d'un utilisateur, et le rayon d'utilisation de l'utilisateur est une plage à l'intérieur de laquelle l'utilisateur peut toucher l'écran tactile (310) en utilisant un moyen pour toucher.

12. Dispositif d'affichage (300, 360, 400) selon la revendication 10, dans lequel le dispositif d'affichage (300, 360, 400) est en outre configuré, lorsque le dispositif d'affichage (300, 360, 400) reçoit une entrée tactile pour désigner une zone de commande (410, 530, 610, 710, 910, 1010, 1310, 1410, 1620, 1710, 1810, 1920, 2020, 2120, 2330, 2600, 2630, 2700, 2720, 2810), pour :
afficher une zone qui reçoit la première entrée tactile en impartissant des effets graphiques à la zone ; et
recevoir, dans le dispositif d'affichage (300, 360, 400), une quatrième entrée tactile pour déplacer la zone, à laquelle les effets graphiques sont impartis, si la zone à laquelle les effets graphiques sont impartis n'inclut pas d'objet affiché,
dans lequel les effets graphiques sont des effets obtenus lorsque des facteurs reconnaissables par l'utilisateur sont affichés de différentes manières.

13. Dispositif d'affichage (300, 360, 400) selon la revendication 10, dans lequel le dispositif d'affichage (300, 360, 400) est en outre configuré pour impartir des effets graphiques distinguables de l'image graphique de la zone de commande (410, 530, 610, 710, 910, 1010, 1310, 1410, 1620, 1710, 1810, 1920, 2020, 2120, 2330, 2600, 2630, 2700, 2720, 2810) à la zone cible, dans lequel les effets graphiques sont des effets obtenus lorsque des facteurs reconnaissables par l'utilisateur sont affichés de différentes manières.

14. Dispositif d'affichage (300, 360, 400) selon la revendication 10, dans lequel le déplacement de l'objet en duplicata et l'affichage de la zone cible déplacée incluent le déplacement d'une position de l'objet en duplicata dans une direction opposée à une direction de la troisième entrée tactile par rapport à l'image adjacente de la zone de commande (410, 530, 610, 710, 910, 1010, 1310, 1410, 1620, 1710, 1810, 1920, 2020, 2120, 2330, 2600, 2630, 2700, 2720, 2810) et l'affichage de la zone cible déplacée.

15. Dispositif d'affichage (300, 360, 400) selon la revendication 10, dans lequel le dispositif d'affichage (300, 360, 400) est en outre configuré pour :
recevoir une cinquième entrée tactile pour changer des propriétés visuelles de l'objet inclus dans la zone de commande (410, 530, 610, 710, 910, 1010, 1310, 1410, 1620, 1710, 1810, 1920, 2020, 2120, 2330, 2600, 2630, 2700, 2720, 2810) ; et
afficher des propriétés visuelles changées de l'objet en duplicata en réponse à une cinquième entrée tactile.
